# FASCICULE DE BREVET EUROPEEN

(11) **EP 3 891 935 B1**
(45) Date de publication et mention de la délivrance du brevet: **15.02.2023**
(21) Numéro de dépôt: 19839642.6
(22) Date de dépôt: 03.12.2019
(51) Int. Cl.: H04L 41/0816, H04L 45/02

(54) **PROCÉDÉ DE CONFIGURATION D'UN NOEUD D'UN RÉSEAU**
VERFAHREN ZUR KONFIGURIERUNG EINES NODES EINES NETZWERKS
METHOD FOR CONFIGURING A NODE OF A NETWORK

(30) Priorité: 07.12.2018 FR 1872545
(43) Date de publication de la demande: 13.10.2021
(73) Titulaire: Orange, 92130 Issy-les-Moulineaux (FR)
(72) Inventeur: BOUCADAIR, Mohamed, 92326 CHÂTILLON CEDEX (FR); JACQUENET, Christian, 92326 CHÂTILLON CEDEX (FR)
(74) Mandataire: Cabinet Beau de Loménie
(86) Numéro de dépôt international: PCT/FR2019/052901
(87) Numéro de publication internationale: WO 2020/115422

(56) Documents cités:
- WO-A1-2013/182248
- US-A1- 2010 265 956
- US-A1- 2014 181 292
- YUNCHENG ZHU ET AL: "Potential Impacts of Four-Byte AS Numbers in Partial Deployment", NETWORKS, 2007. ICON 2007. 15TH IEEE INTERNATIONAL CONFERENCE ON, IEEE, PI, 1 novembre 2007 (2007-11-01), pages 212-217, XP031211081, ISBN: 978-1-4244-1229-7

## Description

### Technique antérieure

L'invention se rapporte au domaine général des télécommunications.

Elle concerne plus particulièrement la configuration de dispositifs d'un réseau de télécommunications mettant en oeuvre un protocole de routage dynamique, tel que le protocole BGP (Border Gateway Protocol) ou sa version sécurisée BGPsec, ou encore le protocole TRIP (Telephony Routing over IP), pour le calcul, la sélection et l'établissement de routes destinées à acheminer le trafic dans le réseau.

De tels protocoles de routage sont couramment utilisés dans les réseaux de télécommunications pour communiquer des informations de routage entre différents systèmes autonomes (ou AS pour « Autonomous System » en anglais). Le réseau Internet comprend plusieurs dizaines de milliers de systèmes autonomes, chacun étant exploité par une entité administrative spécifique, appelée opérateur ou administrateur de réseau. Chaque système autonome visible sur Internet est identifié par un numéro globalement unique appelé numéro de système autonome ou numéro d'AS (ou encore ASN pour « AS Number » en anglais). Un exemple se trouve dans US 2010/265956.

Le protocole BGP est également utilisé pour des besoins intra-opérateur, par exemple pour l'échange de routes entre des infrastructures d'accès et des infrastructures de coeur de réseau.

Il est en outre de plus en plus utilisé aujourd'hui dans les infrastructures réseau (aussi désignées plus simplement dans la suite par « réseaux ») sur lesquelles s'appuient les centres de données (« Data Centers », ou DC en anglais), et notamment les centres de données de taille importante, aussi connus sous le nom de MSDC (Massively Scalable Data Centers) ou HSDC (Hyper-Scale Data Centers). Le protocole BGP permet au sein de ces infrastructures réseau d'échanger des informations de routage entre les différents équipements du réseau (par exemple routeurs, contrôleurs, ou commutateurs). L'infrastructure réseau d'un centre de données peut constituer un système autonome à part entière ou être organisée selon un ensemble de systèmes autonomes, qui peuvent par exemple former une « confédération BGP » lorsque l'infrastructure est massivement distribuée. Au sein d'une telle infrastructure réseau, des numéros d'AS privés, c'est-à-dire non visibles de l'Internet, sont souvent utilisés pour faciliter la gestion de la politique de routage BGP sans devoir requérir l'attribution d'un numéro d'AS globalement unique. Ceci permet de distinguer plus facilement l'infrastructure réseau du centre de données à proprement parler, du réseau auquel cette infrastructure est connectée et auquel un numéro d'AS distinct est affecté. Au sein de l'infrastructure réseau du centre de données, un même numéro d'AS peut par exemple être utilisé par plusieurs routeurs situés sur un même niveau hiérarchique. Aussi, des extensions BGP spécifiques aux centres de données (par ex. « allowas-in ») ont été développées par certains constructeurs pour pouvoir utiliser un même numéro d'AS dans des niveaux hiérarchiques différents d'un DC.

Afin de simplifier les procédures de configuration des équipements de l'infrastructure réseau d'un centre de données et de minimiser les risques d'erreur de configuration notamment, le déploiement de ce centre de données nécessite un niveau d'automatisation élevé des processus de production de ressources (par ex. production dynamique de machines virtuelles destinées à héberger certaines fonctions réseau virtualisées). Une telle automatisation permet en outre d'améliorer la disponibilité et la stabilité du réseau : toute modification de la topologie de l'infrastructure réseau liée à l'introduction de nouvelles ressources de commutation (par exemple commutateurs, routeurs) ou de transmission (par exemple liens intra- et inter-centres de données destinés à fournir plus de capacité pour écouler plus de trafic) doit se faire d'une manière dynamique et requérant un effort de configuration minimal, voire nul.

De plus, il est important de maîtriser la volumétrie du trafic de signalisation constitué notamment des informations de configuration émises au sein de l'infrastructure réseau, typiquement par un ou plusieurs contrôleurs réseau lorsque le centre de données s'appuie sur une architecture de type SDN (Software-Defined Networking), par exemple. Ce trafic de signalisation peut également comprendre des notifications émises par certains équipements du réseau lorsqu'ils détectent une modification de sa topologie, par exemple la rupture d'une connexion entre deux commutateurs (switch, en anglais) localisés au sein d'un même centre de données. Il est impératif de s'assurer que la volumétrie du trafic de signalisation échangé ne pénalise en aucune manière la disponibilité du ou des services qui impliquerai(en)t des ressources hébergées au sein de l'infrastructure du centre de données.

Afin d'optimiser l'exploitation des ressources au sein d'un centre de données, la configuration des équipements du réseau sous-jacent (aussi appelés « noeuds » dans la suite de la description) doit se conformer à des procédures adéquates de nomenclature des interfaces, des adresses ou préfixes alloués à ces interfaces, etc. En particulier, la mise en place d'une politique de routage au sein de l'infrastructure réseau du centre de données selon un protocole de routage tel que BGP ou BGPsec, repose sur l'établissement de sessions BGP entre les différents noeuds du réseau. Ces sessions sont établies sur la base de différentes informations de configuration et notamment sur le numéro d'AS auquel appartient chaque noeud : le numéro d'AS est une information obligatoire pour pouvoir établir une session BGP entre deux routeurs. En effet, si un noeud BGP tel qu'un routeur n'a pas la connaissance du numéro du système autonome auquel il appartient, il est incapable d'établir une session BGP avec un autre routeur appartenant à un système autonome voisin, mais également avec les autres routeurs du système autonome auquel il appartient. Or, l'établissement de sessions BGP entre tous les noeuds d'un système autonome est impératif pour garantir une vision globale et cohérente de la topologie de l'infrastructure réseau ; le numéro d'AS conditionne l'établissement de ces sessions. On note par ailleurs que ce numéro d'AS est également utilisé pour sélectionner les routes BGP et pour la détection et la prévention de boucles de routage au sein de l'infrastructure réseau.

L'exploitation d'un centre de données requiert une structuration dynamique et flexible des systèmes autonomes le composant : par exemple, des noeuds peuvent être groupés pour former un même système autonome, un système autonome peut être scindé en plusieurs groupes ou clusters chacun associé à un numéro d'AS différent, l'opérateur du centre de données peut envisager de migrer les numéros d'AS utilisés au sein de son infrastructure vers un nouveau format (par ex. d'un format codé sur 2 octets à un format codé sur 4 octets), etc. Ces opérations se traduisent par des changements (autrement dit, des migrations) des numéros d'AS associés à certains noeuds du centre de données vers d'autres numéros d'AS utilisés en remplacement des premiers.

Dans l'état actuel de la technique, il n'existe pas de mécanisme permettant une migration d'un ou de plusieurs numéros d'AS au sein d'un réseau sans provoquer d'interruption de service (et particulièrement, sans provoquer la rupture des sessions BGP associées aux anciens numéros d'AS). La migration de numéros d'AS est en effet gérée aujourd'hui en réinitialisant (et donc en interrompant) les sessions BGP actives associées aux numéros d'AS qui sont modifiés et en mettant en place, par exemple, des politiques d'ingénierie de trafic qui permettent de contourner les noeuds impactés par les modifications de numéros d'AS. Il convient de noter que la suppression de routes (en amont de la modification d'un numéro d'AS) puis l'annonce des routes (après modification du numéro d'AS) ont en outre un impact négatif sur la stabilité du routage BGP au sein du réseau à cause des messages de contrôle requis pour mettre à jour les tables de routage.

Les inconvénients qui viennent d'être décrits pour le protocole de routage BGP s'appliquent également à d'autres protocoles de routage dynamiques tels que BGPsec ou TRIP notamment.

### Objet et résumé de l'invention

La présente invention permet notamment de pallier les inconvénients précités en proposant un procédé de configuration d'un premier noeud d'un réseau utilisant un premier numéro de système autonome dans au moins une session établie avec un autre noeud du réseau et conforme à un protocole de routage dynamique mis en oeuvre dans le réseau, ce procédé comprenant les étapes suivantes mises en oeuvre par le premier noeud :
- une étape de réception d'un message de configuration comprenant au moins une information représentative d'au moins un deuxième numéro de système autonome destiné à être utilisé par le premier noeud en remplacement du premier numéro de système autonome ;
- une étape de configuration dudit premier noeud avec ledit au moins un deuxième numéro de système autonome ;
- une étape d'identification d'au moins un deuxième noeud du réseau ayant au moins une session, conforme audit protocole de routage dynamique, active avec le premier noeud, dans laquelle le premier noeud est associé au premier numéro de système autonome ; et
- une étape d'envoi, audit au moins un deuxième noeud, d'un message de commande requérant le remplacement par ledit au moins un deuxième noeud du premier numéro de système autonome associé audit premier noeud par ledit au moins un deuxième numéro de système autonome, de sorte qu'après ledit remplacement le premier noeud est associé à un dit deuxième numéro de système autonome dans ladite au moins une session active.

Corrélativement, l'invention vise aussi un dispositif d'un réseau, dit premier noeud, configuré pour utiliser un premier numéro de système autonome dans au moins une session établie avec un autre noeud du réseau et conforme à un protocole de routage dynamique mis en oeuvre dans le réseau, ledit premier noeud comprenant :
- un module de réception, apte à recevoir un message de configuration comprenant au moins une information représentative d'au moins un deuxième numéro de système autonome destiné à être utilisé par le premier noeud en remplacement du premier numéro de système autonome ;
- un module de configuration paramétré pour configurer le premier noeud avec ledit au moins un deuxième numéro de système autonome ;
- un module d'identification configuré pour identifier au moins un deuxième noeud du réseau ayant au moins une session conforme au protocole de routage dynamique active avec le premier noeud, dans laquelle le premier noeud est associé au premier numéro de système autonome ; et
- un module d'envoi, configuré pour envoyer, audit au moins un deuxième noeud, un message de commande requérant le remplacement par ledit au moins un deuxième noeud du premier numéro de système autonome associé audit premier noeud par ledit au moins un deuxième numéro de système autonome, de sorte qu'après ledit remplacement, le premier noeud est associé à un dit deuxième numéro de système autonome dans ladite au moins une session active.

L'invention vise aussi un procédé de traitement d'un message de commande requérant un remplacement d'un premier numéro de système autonome associé à un premier noeud d'un réseau mettant en oeuvre un protocole de routage dynamique, par au moins un deuxième numéro de système autonome, ledit procédé de traitement étant mis en oeuvre par un deuxième noeud du réseau et comprenant :
- une étape de vérification s'il existe :
   au moins une session active entre le premier noeud et le deuxième noeud conforme au protocole de routage dynamique et dans laquelle le premier noeud est associé au premier numéro de système autonome ; et/ou
   au moins une entrée associée au premier numéro de système autonome dans au moins une table de routage maintenue par le deuxième noeud pour la mise en oeuvre du protocole de routage dynamique dans le réseau ;
- s'il existe au moins une session active, une étape de remplacement du premier numéro de système autonome associé au premier noeud dans ladite au moins une session active par ledit au moins un deuxième numéro de système autonome ; et
- s'il existe au moins une entrée dans au moins une table de routage maintenue par le deuxième noeud, une étape de remplacement dans ladite au moins une table de routage du premier numéro de système autonome associé à ladite au moins une entrée par ledit au moins un deuxième numéro de système autonome.

Corrélativement, l'invention concerne également un dispositif d'un réseau, dit deuxième noeud, configuré pour traiter un message de commande requérant un remplacement d'un premier numéro de système autonome associé à un premier noeud d'un réseau mettant en oeuvre un protocole de routage dynamique, par au moins un deuxième numéro de système autonome, ledit deuxième noeud comprenant :
- un module de vérification, configuré pour vérifier s'il existe :
   au moins une session active entre le premier noeud et le deuxième noeud conforme au protocole de routage dynamique et dans laquelle le premier noeud est associé au premier numéro de système autonome ; et/ou
   au moins une entrée associée au premier numéro de système autonome dans au moins une table de routage maintenue par le deuxième noeud pour la mise en oeuvre du protocole de routage dynamique dans le réseau ;
- un premier module de remplacement, activé s'il existe au moins une session active, et configuré pour remplacer le premier numéro de système autonome associé au premier noeud dans ladite au moins une session active par ledit au moins un deuxième numéro de système autonome ; et
- un second module de remplacement, activé s'il existe au moins une entrée dans au moins une table de routage maintenue par le deuxième noeud, et configuré pour remplacer dans ladite au moins une table de routage le premier numéro de système autonome associé à ladite au moins une entrée par ledit au moins un deuxième numéro de système autonome.

L'invention offre une solution simple permettant de gérer la migration de numéros d'AS au sein d'un réseau utilisant un protocole de routage dynamique et qui ne provoque pas d'interruption de service. Cette solution s'appuie sur la configuration dynamique d'un nouveau numéro d'AS au niveau d'un premier noeud d'un réseau utilisant un premier numéro d'AS, puis la propagation automatique de cette configuration vers les autres noeuds du réseau (deuxièmes et troisièmes noeuds au sens de l'invention) permettant ainsi une prise en compte de ce nouveau numéro d'AS notamment dans les sessions actives dans lesquelles le premier noeud est impliqué et utilisait le premier numéro d'AS, sans interrompre ces sessions actives.

Cette propagation automatique est permise avantageusement par l'introduction d'un nouveau message de commande destiné aux noeuds du réseau au niveau desquels le premier noeud est associé à son premier numéro de système autonome : ces noeuds peuvent être soit des noeuds du réseau qui ont une session active avec le premier noeud, soit des noeuds qui ont été informés de routes passant par le premier noeud et qui ont stocké ces routes dans des tables de routage utilisées pour la mise en oeuvre du protocole de routage dynamique. Le message de commande est propagé de proche en proche au sein du réseau, d'abord entre le premier noeud et les noeuds voisins avec lesquels il entretient au moins une session active, puis entre ces noeuds voisins et leurs propres noeuds voisins auxquels ils ont annoncé une route passant par le premier noeud ou qui leur ont annoncé une route passant par le premier noeud. On s'assure ainsi que la nouvelle configuration du premier noeud, et plus particulièrement la migration de son numéro de système autonome, est signalée à chaque noeud du réseau qui est susceptible de faire référence à un moment ou à un autre au numéro de système autonome qui est associé au premier noeud, que ce soit par exemple pour l'établissement d'une session selon le protocole de routage dynamique avec le premier noeud, la mise à jour dans l'une de ses tables de routage d'une route passant par ce premier noeud ou l'annonce à un noeud voisin d'une telle route.

Ainsi, l'invention permet d'automatiser et de simplifier certaines opérations requises pour l'activation et le bon fonctionnement du protocole de routage dynamique au sein du réseau. Ceci présente un avantage particulier en cas d'introduction de nouveaux systèmes autonomes, d'organisation du réseau en plusieurs systèmes autonomes, ou de migration de tout ou partie des numéros d'AS utilisés dans un réseau vers un nouveau format, l'invention permettant une renumérotation automatique des numéros d'AS au sein du réseau sans interruption de service. Il en résulte une stabilité consolidée du réseau mettant en oeuvre le protocole de routage dynamique. En outre, l'invention permet avantageusement de limiter la charge et le nombre de messages de contrôle échangés entre les noeuds du réseau pour tenir compte de la migration du ou des numéros d'AS : en effet, grâce à l'invention, aucune route n'a besoin d'être supprimée puis réinstallée du fait du changement de numéro(s) d'AS. La gestion des réseaux activant le protocole de routage dynamique est donc facilitée.

On note qu'aucune limitation n'est attachée au protocole de routage dynamique considéré. L'invention a certes une application privilégiée lorsque le protocole de routage mis en oeuvre dans le réseau est le protocole BGP, toutefois elle s'applique également à d'autres protocoles de routage dynamiques, comme par exemple les protocoles BGPsec ou TRIP.

Conformément à l'invention, le message de configuration adressé au premier noeud peut comprendre un ou plusieurs deuxièmes numéros d'AS à utiliser par le premier noeud en remplacement de son premier numéro d'AS. Différentes façons de signaler le, ou les numéros d'AS vers le(s)quel(s) le premier noeud doit migrer peuvent être envisagées.

Ainsi, dans un mode particulier de réalisation du procédé de configuration selon l'invention, ladite au moins une information représentative dudit au moins un deuxième numéro de système autonome peut comprendre :
- ledit au moins deuxième numéro de système autonome ; ou
- au moins une différence entre ledit au moins un deuxième numéro de système autonome et ledit premier numéro de système autonome.

La seconde option permet de minimiser les modifications logicielles nécessaires et de faciliter ainsi la mise en oeuvre de l'invention. En s'appuyant sur la seconde option, il est possible d'initialiser une session selon le protocole de routage dynamique entre le premier noeud et un autre noeud du réseau en associant dans cette session au premier noeud un numéro d'AS et une variable « delta ». La variable « delta » est valorisée lors de l'initialisation à 0 puis à la différence indiquée dans le message de configuration lorsqu'un changement de numéro d'AS du premier noeud est requis. Ceci permet de modifier la configuration de la session active à laquelle participe le premier noeud sans l'interrompre.

Différents modes d'activation du (ou des) deuxième(s) numéro(s) d'AS peuvent être envisagés : le changement de numéro d'AS peut avoir un effet immédiat ou au contraire différé. Les modalités d'application du changement de numéro d'AS pouvant être précisées dans le message de configuration (par exemple dans un champ prévu à cet effet).

Ainsi, dans un mode particulier de réalisation du procédé de configuration selon l'invention, lors de l'étape de configuration, le premier noeud est configuré pour utiliser immédiatement sur ledit réseau ledit au moins un deuxième numéro de système autonome.

On note que dans ce mode de réalisation, bien qu'une utilisation immédiate dudit au moins un deuxième numéro de système par le premier noeud soit requise, il est possible d'envisager de conserver le premier numéro d'AS dans la configuration locale du premier noeud, pendant au moins une certaine période. Ce mode de réalisation peut être avantageux pour la mise en place de politiques d'ingénierie de trafic en temps réel requises, par exemple, pour la mitigation d'attaques de déni de service ou en cas de détection de doublons de numéro d'AS.

Dans un autre mode de réalisation de l'invention du procédé de configuration selon l'invention, lors de l'étape de configuration, le premier noeud est configuré pour utiliser sur ledit réseau ledit au moins un deuxième numéro de système autonome de façon différée sur détection d'un événement prédéterminé indiqué dans le message de configuration.

Un tel événement peut être par exemple la détection d'un horodatage particulier ou l'échéance d'une temporisation. Ce mode de réalisation peut être avantageusement exploité pour s'assurer que les autres noeuds du réseau ont eu le temps d'être informés du changement de numéro d'AS associé au premier noeud. Ce faisant, la configuration du protocole de routage dynamique est coordonnée au sein du domaine réseau assurant ainsi une cohérence globale de la configuration des noeuds du réseau.

Dans ce mode de réalisation particulier, le message de commande peut également comprendre une indication d'une échéance à respecter par ledit au moins un deuxième noeud pour remplacer le premier numéro de système autonome associé audit premier noeud par ledit au moins un deuxième numéro de système autonome.

Corrélativement, lorsque le message de commande comprend une telle indication, les étapes de remplacement du procédé de traitement selon l'invention sont programmées pour être exécutées à l'échéance indiquée, autrement dit pour que le changement de numéro d'AS soit activé automatiquement ou de manière équivalente soit effectif à cette échéance.

Comme mentionné précédemment, conformément à l'invention, le deuxième noeud est configuré pour remplacer, dans ses sessions actives avec le premier noeud et dans ses tables de routage, le premier numéro d'AS initialement attribué au premier noeud par ledit au moins un deuxième numéro d'AS qui lui est transmis dans le message de commande.

Dans un mode particulier de réalisation selon l'invention, le procédé de traitement comprend en outre, s'il existe au moins une entrée associée au premier numéro de système autonome dans une table de routage contenant au moins une route annoncée par le deuxième noeud à au moins un troisième noeud du réseau voisin du deuxième noeud, une étape d'envoi du message de commande audit au moins un troisième noeud.

Ceci permet une propagation de la nouvelle configuration du premier noeud dans le réseau, y compris vers les noeuds qui ne disposent pas de sessions actives avec le premier noeud. Le deuxième noeud par ce biais informe les noeuds auxquels il a annoncé des routes passant par le premier noeud de la nouvelle configuration du premier noeud. Chacun des troisièmes noeuds ainsi informés peut à son tour mettre en oeuvre le procédé de traitement selon l'invention. En d'autres termes, dans le procédé de traitement selon l'invention, le deuxième noeud est soit un noeud ayant une session active avec le premier noeud, soit un noeud auquel une route passant par le premier noeud a été annoncée par un autre noeud dans le réseau.

En outre, dans ce mode de réalisation, lorsque le message de commande reçu par le deuxième noeud comprend une durée de temporisation à respecter avant d'appliquer ledit au moins un deuxième numéro de système autonome, le procédé de traitement peut comprendre une étape de décrémentation avant d'envoyer le message de commande audit au moins un troisième noeud, de la durée de temporisation d'une durée de traitement du message de commande par le deuxième noeud et d'une durée d'acheminement du message de commande entre le deuxième noeud et ledit au moins un troisième noeud.

De la sorte, l'échéance pour activer la nouvelle configuration du premier noeud fixée par le message de configuration est respectée. On s'assure ainsi que la migration du numéro d'AS du premier noeud vers le deuxième numéro d'AS est réalisée automatiquement à l'échéance requise.

Dans un mode particulier de réalisation, les différentes étapes du procédé de configuration et/ou du procédé de traitement sont déterminées par des instructions de programmes d'ordinateurs.

En conséquence, l'invention vise aussi un programme d'ordinateur sur un support d'informations, ce programme étant susceptible d'être mis en oeuvre dans un dispositif ou un noeud du réseau ou plus généralement dans un ordinateur, ce programme comportant des instructions adaptées à la mise en oeuvre des étapes d'un procédé de configuration ou d'un procédé de traitement tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations ou d'enregistrement lisible par un ordinateur, et comportant des instructions d'un programme d'ordinateur tel que mentionné ci-dessus.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution du procédé en question.

L'invention vise également un système de communication dans un réseau mettant en oeuvre un protocole de routage dynamique, ledit système comprenant :
au moins un dispositif dit premier noeud, conforme à l'invention, configuré avec un premier numéro de système autonome et apte à recevoir un message de configuration comprenant au moins un deuxième numéro de système autonome destiné à être utilisé par le premier noeud sur le réseau ; et
au moins un dispositif dit deuxième noeud conforme à l'invention, apte à mettre en oeuvre un procédé de traitement selon l'invention.

Le système de communication selon l'invention bénéficie des mêmes avantages exposés précédemment que le premier et le deuxième noeud selon l'invention.

Dans un mode particulier de réalisation, le système de communication comprend un contrôleur et une pluralité de premiers noeuds conformes à l'invention configurés avec desdits premiers numéros de système autonome, ledit contrôleur étant configuré, lorsque desdits premiers numéros de système autonome distincts doivent être remplacés par des deuxièmes numéros de système autonome, pour envoyer successivement auxdits premiers noeuds configurés avec ces premiers numéros de système autonome distincts les messages de configuration comprenant lesdits deuxièmes numéros de système autonome, ledit contrôleur étant configuré pour attendre après avoir envoyé un dit message de configuration destiné à remplacer un dit premier numéro de système autonome à au moins un dit premier noeud configuré avec ce premier numéro de système autonome, le remplacement effectif dudit premier numéro de système autonome dans le système de communication avant d'envoyer un message de configuration destiné à remplacer un autre dit premier numéro de système autonome à au moins un autre dit premier noeud configuré avec cet autre premier numéro de système autonome.

Ce mode de réalisation consiste à gérer la migration d'un seul numéro d'AS à la fois au sein de l'infrastructure réseau. En d'autres termes, le contrôleur planifie les différentes opérations de migration des numéros d'AS pour s'assurer du bon déroulement de la procédure de migration, une nouvelle migration d'un numéro d'AS n'étant entreprise que lorsque la migration de l'AS précédent a été exécutée et prise en compte par le réseau. On s'assure ainsi de la stabilité du réseau ayant mis en oeuvre le protocole de routage dynamique suite à la migration d'un numéro d'AS avant d'entreprendre une nouvelle migration.

Dans un autre mode de réalisation, le système de communication comprend un contrôleur et une pluralité de premiers noeuds conformes à l'invention configurés avec desdits premiers numéros de système autonome, ledit contrôleur étant configuré, lorsque desdits premiers numéros de système autonome distincts associés auxdits premiers noeuds doivent être remplacés par des deuxièmes numéros de système autonome, pour inclure dans lesdits messages de configuration envoyés auxdits premiers noeuds une indication d'une même échéance à respecter pour chacun desdits premiers noeuds pour utiliser au sein du réseau lesdits deuxièmes numéros de système autonome en remplacement desdits premiers numéros de système autonome.

Autrement dit, toutes les migrations de numéros d'AS envisagées à un instant donné sont déclenchées simultanément dans le réseau par le contrôleur.

On peut également envisager, dans d'autres modes de réalisation, que le procédé de configuration, le procédé de traitement, le dispositif dit premier noeud, le dispositif dit deuxième noeud, et le système de communication selon l'invention présentent en combinaison tout ou partie des caractéristiques précitées.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig. 1] la figure 1 représente, de façon schématique, un système de communication conforme à l'invention, dans un mode particulier de réalisation ;
[Fig. 2] la figure 2 illustre un dispositif du système de communication de la [Fig. 1], conforme à l'invention ;
[Fig. 3] la figure 3 représente schématiquement l'architecture matérielle du dispositif de la figure 2, dans un mode particulier de réalisation ;
[Fig. 4] la figure 4 représente, sous forme d'ordinogramme, les principales étapes d'un procédé de configuration selon l'invention tel qu'il est mis en oeuvre par un dispositif du système de communication de la [Fig. 1] dans un mode particulier de réalisation ;
[Fig. 5A] la figure 5A représente un format de messages de commande utilisés par l'invention ;
[Fig. 5B] la figure 5B représente un autre format de messages de commande utilisés par l'invention ;
[Fig. 5C] la figure 5C représente un autre format de messages de commande utilisés par l'invention ;
[Fig. 6] la figure 6 représente, sous forme d'ordinogramme, les principales étapes d'un procédé de traitement selon l'invention tel qu'il est mis en oeuvre par un dispositif du système de communication de la [Fig. 1] dans un mode particulier de réalisation ;
[Fig. 7A] la figure 7A illustre la mise à jour de la configuration locale du dispositif au cours du procédé de traitement représenté à la figure 6 ;
[Fig. 7B] la figure 7B illustre également la mise à jour de la configuration locale du dispositif au cours du procédé de traitement représenté à la figure 6 ;
[Fig. 7C] la figure 7C illustre également la mise à jour de la configuration locale du dispositif au cours du procédé de traitement représenté à la figure 6 ;
[Fig. 8A] la figure 8A illustre la migration en plusieurs étapes de plusieurs numéros d'AS mise en oeuvre au sein du système de communication de la figure 1 dans un mode particulier de réalisation ;
[Fig. 8B] la figure 8B illustre également la migration en plusieurs étapes de plusieurs numéros d'AS mise en oeuvre au sein du système de communication de la figure 1 dans un mode particulier de réalisation ;
[Fig. 8C] la figure 8C illustre la migration en plusieurs étapes de plusieurs numéros d'AS mise en oeuvre au sein du système de communication de la figure 1 dans un mode particulier de réalisation ; et
[Fig. 9] la figure 9 illustre la migration en une seule étape de plusieurs numéros d'AS mise en oeuvre au sein du système de communication de la figure 1 dans un mode particulier de réalisation.

### Description détaillée de l'invention

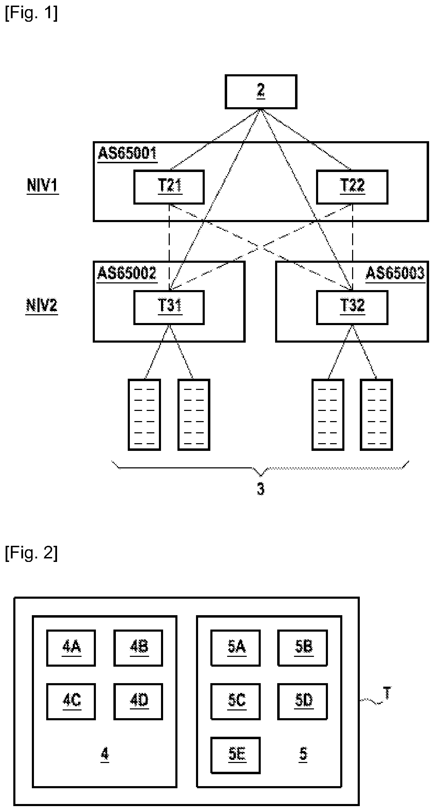

La **figure 1** représente, dans son environnement, un système de communication 1 conforme à l'invention, dans un mode particulier de réalisation.

Dans l'exemple envisagé à la figure 1, le système de communication 1 comprend une pluralité de dispositifs de réseau (au nombre de 4 sur la figure 1, globalement référencés par T), tous conformes ici à l'invention, et appartenant à l'infrastructure réseau d'un centre de données (DC). Les dispositifs de réseau T sont reliés entre eux via un ou plusieurs liens connectant des interfaces de communication desdits dispositifs (illustrée(s) sur la figure 1 en traits discontinus) et forment un réseau de communication R. Plus particulièrement, dans l'exemple représenté à titre illustratif à la figure 1, les dispositifs de réseau T21 et T22 sont reliés chacun aux dispositifs de réseau T31 et T32.

Aucune limitation n'est attachée à la nature des dispositifs de réseau T (aussi appelés noeuds du réseau R) : il s'agit d'éléments de réseau quelconques, comme par exemple des routeurs, des commutateurs, etc. Aucune limitation n'est attachée non plus à la nature des interfaces de communication utilisées par les dispositifs T pour communiquer entre eux au sein du réseau R. Il peut s'agir d'interfaces de communication filaires ou sans fil, mobiles ou fixes, physiques ou virtuelles, etc.

Le réseau de communication R formé par les dispositifs T met en oeuvre un protocole de routage dynamique. Dans le mode de réalisation décrit ici, le protocole de routage dynamique considéré est le protocole BGP décrit notamment dans le document RFC 4271 édité par l'IETF (Internet Engineering Task Force). L'invention peut toutefois s'appliquer à d'autres protocoles de routage dynamique utilisant des numéros d'AS, tels que par exemple la version sécurisée BGPsec du protocole BGP décrite dans le document RFC 8205 édité par l'IETF, au protocole de routage TRIP, ou le protocole Link-State Vector Routing (LSVR) en cours de spécification à l'IETF.

Dans l'exemple illustré à la figure 1, le système de communication 1 est organisé en une pluralité de niveaux hiérarchiques (deux sur la figure 1 référencés par NIV1 et NIV2), chaque niveau hiérarchique étant lui-même organisé en un ou plusieurs clusters (c.-à-d. groupes) de dispositifs : un cluster pour le niveau hiérarchique NIV1 comprenant deux dispositifs T21 et T22, et deux clusters pour le niveau hiérarchique NIV2 comprenant chacun respectivement un dispositif T31 et un dispositif T32. Les dispositifs de réseau du dernier niveau hiérarchique NIV2 sont reliés ici aux différentes machines virtuelles ou matérielles 3 (par ex. serveurs) du centre de données.

Bien entendu, cette architecture d'infrastructure réseau et son organisation en niveaux hiérarchiques et en clusters (comprenant un ou plusieurs dispositifs) n'est donnée qu'à titre illustratif, et l'invention s'applique à d'autres types d'architectures (ayant une unité centrale telle que le contrôleur 2 ou non). Le choix de l'architecture du réseau R relève de l'ingénierie du réseau, de sa topologie, de la taille du centre de données, etc.

De façon connue en soi, les dispositifs ou noeuds T du réseau R doivent, pour établir des sessions BGP au sein du réseau R avec leurs voisins (c'est-à-dire avec les dispositifs du réseau R avec lesquels ils disposent d'une connexion physique établie), connaître le ou les numéros de systèmes autonomes qui leur sont associés (c'est-à-dire auxquels ils sont rattachés), ainsi que les numéros de systèmes autonomes auxquels leurs voisins sont associés. Dans l'exemple d'architecture d'infrastructure réseau envisagé à la figure 1, les choix suivants sont faits par l'opérateur du centre de données pour cette allocation :
utilisation de numéros d'AS privés ; et
utilisation d'un même numéro d'AS pour les dispositifs du réseau situés à un même niveau hiérarchique et appartenant à un même cluster.

Ainsi, à titre illustratif sur la figure 1, les noeuds T21 et T22 sont associés au numéro d'AS 65001, le noeud T31 au numéro d'AS 65002 et le noeud T32 au numéro d'AS 65003. Les noeuds T21, T22, T31 et T32 sont configurés avec ces numéros d'AS, c'est-à-dire que ces numéros d'AS sont mémorisés dans la configuration locale des noeuds (elle-même stockée dans une mémoire non volatile des noeuds), par exemple dans une variable « cur-asn ». Ce sont ces numéros que les noeuds utilisent lors de l'établissement de sessions BGP avec leurs voisins.

Cette politique d'allocation des numéros d'AS n'est bien entendu donnée qu'à titre illustratif. D'autres politiques peuvent être mises en oeuvre par l'opérateur du centre de données (par exemple, allocation d'un même numéro d'AS pour l'ensemble des dispositifs appartenant à un même niveau hiérarchique, ou d'un même numéro d'AS pour l'ensemble des dispositifs du réseau, des numéros d'AS distincts par famille d'adresses ; etc.).

Comme mentionné précédemment, l'invention permet, lorsqu'une migration d'un ou de plusieurs numéros d'AS associés à un ou plusieurs noeuds du système de communication 1 est envisagée, de configurer dynamiquement et automatiquement les noeuds du système de communication 1 sans provoquer d'interruption de service (et notamment sans interrompre les sessions BGP actives dans le réseau R). Par migration, on entend ici un changement du numéro d'AS qui est associé à un noeud du système de communication 1 et avec lequel il a été configuré pour établir et maintenir des sessions BGP, peu importe que cette migration fasse suite à une configuration initiale du noeud en question ou à une configuration dynamique telle que proposée par l'invention. Aucune limitation n'est attachée non plus à la raison de cette migration (changement de format des numéros d'AS, organisation du réseau en plusieurs systèmes autonomes, regroupement de noeuds au sein d'un système autonome, etc.).

Ainsi, on suppose ici à titre illustratif que la migration résulte d'une volonté de l'opérateur du centre de données de changer le format des numéros d'AS utilisés dans son infrastructure réseau, en migrant d'un format codé sur 2 octets à un format codé sur 4 octets. Plus spécifiquement, l'opérateur souhaite migrer les numéros d'AS 65001, 65002 et 65003 (premiers numéros d'AS au sens de l'invention) qui ont été associés initialement aux dispositifs T21, T22, T31 et T32, vers les numéros d'AS 4200000001, 4200000002 et 4200000003 (deuxièmes numéros d'AS au sens de l'invention) respectivement.

On note que, par souci de simplification, on considère ici la migration d'un numéro d'AS vers un unique numéro d'AS (par exemple de 65001 vers 4200000001). Toutefois, l'invention s'applique également lorsqu'on envisage la migration d'un numéro d'AS vers une pluralité de numéros d'AS distincts, le noeud associé ayant alors la possibilité après migration d'utiliser l'un quelconque de ces numéros d'AS pour établir et maintenir des sessions BGP au sein du réseau R.

Dans l'exemple envisagé ici, l'infrastructure réseau sur laquelle s'appuie le centre de données met en oeuvre une architecture SDN (Software Defined Network). Cette hypothèse n'est toutefois pas un prérequis pour mettre en oeuvre l'invention.

Cette infrastructure comprend, outre les dispositifs de réseau T, un contrôleur 2 permettant une exploitation cohérente et déterministe du réseau R du centre de données. Le contrôleur 2 a, de façon connue, une vision globale et systémique du réseau R, de sa topologie, de ses composantes, des fonctions réseau (virtualisées ou non) disponibles, de leur statut, etc. Ce contrôleur 2 est capable de définir une politique de routage au sein du réseau R, s'appuyant sur le protocole BGP, et permettant d'acheminer le trafic du centre de données de façon conforme aux objectifs fixés par l'opérateur du centre de données. Il est, dans l'exemple illustré par la figure 1, pour les besoins de la migration envisagée, relié à chacun des dispositifs de réseau T, à savoir aux dispositifs T21, T22, T31 et T32. Dans l'exemple d'architecture envisagé ici, c'est le contrôleur 2 qui communique à chacun des dispositifs T21, T22, T31 et T32 le numéro d'AS qu'ils doivent prendre en compte.

Dans le mode de réalisation décrit ici, les dispositifs T du réseau R sont tous conformes à l'invention. A cet effet, comme illustré par la **figure 2****,** chaque dispositif T du réseau est équipé à la fois de moyens 4 lui permettant de se configurer avec un ou plusieurs numéros d'AS à partir d'un message de configuration que lui a transmis le contrôleur 2 conformément à l'invention, et d'agir ainsi comme un premier noeud au sens de l'invention, et de moyens 5 lui permettant de traiter conformément à l'invention un message de commande provenant de l'un de ses noeuds voisins dans le réseau R et lui signalant un changement d'un numéro d'AS de l'un des noeuds du réseau R, et d'agir ainsi comme un deuxième noeud au sens de l'invention. On note toutefois que les moyens 4 et 5 ne sont pas nécessairement activés simultanément au niveau du dispositif T. Ainsi par exemple, si le dispositif T ne fait pas l'objet d'une migration du numéro d'AS avec lequel il a été préalablement configuré, les moyens 4 peuvent être désactivés tandis que ses moyens 5 sont activés pour tenir compte le cas échéant, de migrations de numéros d'AS associés à d'autres noeuds du réseau R. Inversement, dès lors qu'un dispositif T est concerné par une migration du numéro d'AS qui lui est associé, ses moyens 4 sont activés.

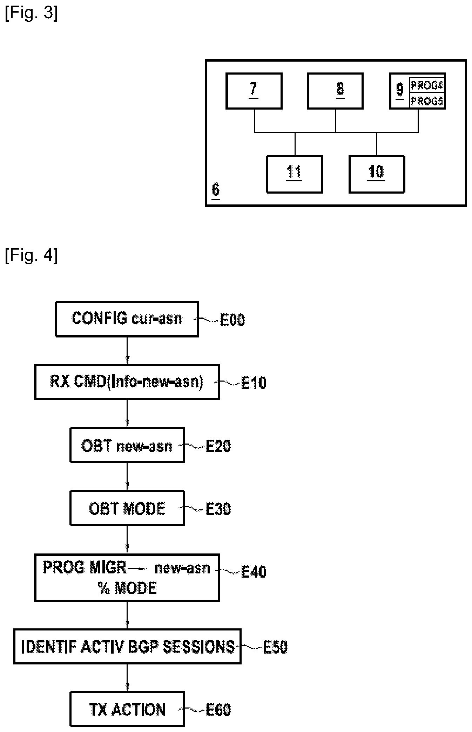

Dans le mode de réalisation décrit ici, les dispositifs T du réseau R ont l'architecture matérielle d'un ordinateur 6 telle qu'illustrée par la **figure 3****.** Ils comprennent notamment un processeur 7, une mémoire vive 8, une mémoire morte 9, une mémoire flash non volatile 10, ainsi que des moyens de communication 11 comprenant une ou plusieurs interfaces de communication.

Les moyens de communication 11 permettent notamment à chaque dispositif T d'être relié au contrôleur 2 ainsi qu'à un ou plusieurs autres dispositifs T du réseau R, et de communiquer avec ces autres dispositifs notamment pour le routage et l'acheminement du trafic au sein du réseau en utilisant le protocole BGP. A cet effet, les dispositifs T sont configurés pour écouter par défaut sur le port TCP 179 en vue de recevoir les messages BGP. D'autres numéros de port peuvent être utilisés pour recevoir les messages de configuration et de commande nécessaires à la mise en oeuvre de l'invention dès lors que les dispositifs T ont été instruits à cet effet au préalable.

La mémoire morte 9 de chaque dispositif de réseau T constitue un support d'enregistrement conforme à l'invention, lisible par le processeur 7 et sur lequel sont enregistrés des programmes d'ordinateur PROG4 et PROG5 conformes à l'invention : le programme PROG4 comporte des instructions pour l'exécution des étapes du procédé de configuration selon l'invention, tandis que le programme PROG5 comporte des instructions pour l'exécution des étapes du procédé de traitement selon l'invention.

Plus particulièrement, le programme d'ordinateur PROG4 définit des modules fonctionnels (et logiciels ici) des moyens 4 du dispositif T, qui sont configurés pour mettre en oeuvre les étapes du procédé de configuration selon l'invention lorsque les moyens 4 du dispositif T sont activés. Les modules fonctionnels définis par le programme PROG4 s'appuient sur et/ou commandent les éléments matériels 7-11 de l'ordinateur 6 cités précédemment, et comprennent notamment ici, comme illustré sur la figure 2 :
- un module de réception 4A, apte à recevoir un message de configuration comprenant au moins une information représentative d'au moins un numéro de système autonome noté new-asn destiné à être utilisé par le dispositif T en remplacement du numéro de système autonome courant (c.-à-d. celui contenu dans la variable cur-asn, noté par la suite v-asn) avec lequel il est configuré lorsqu'il reçoit le message de configuration. Le module de réception 4A exploite notamment le module de communication 11 du dispositif T ;
- un module de configuration 4B paramétré (ou programmé) pour configurer le dispositif T avec ledit au moins un numéro de système autonome new-asn reçu dans le message de configuration, autrement dit pour remplacer dans sa configuration locale, dans la variable cur-asn, le numéro d'AS v-asn par le nouveau numéro d'AS new-asn ;
- un module d'identification 4C configuré pour identifier au moins un autre dispositif ou noeud du réseau ayant au moins une session BGP active avec le dispositif T, et pour lequel le dispositif T est associé au numéro de système autonome v-asn ; et
- un module d'envoi 4D, configuré pour envoyer à cet autre dispositif un message de commande requérant le remplacement par celui-ci du numéro de système autonome v-asn associé au dispositif T par ledit au moins un numéro de système autonome new-asn communiqué dans le message de configuration. Le module d'envoi 4D exploite également le module de communication 11 du dispositif T.

Le programme d'ordinateur PROG5 définit des modules fonctionnels (et logiciels ici) des moyens 5 du dispositif T de réseau, définis pour mettre en oeuvre les étapes du procédé de traitement selon l'invention lorsque les moyens 5 du dispositif T sont activés. Les modules fonctionnels définis par le programme PROG5 s'appuient sur et/ou commandent les éléments matériels 6-10 de l'ordinateur 6 cités précédemment, et comprennent notamment ici, comme illustré sur la figure 2 :
- un module de réception 5A, apte à recevoir un message de commande requérant un remplacement d'un numéro de système autonome noté v-asn1 associé à un autre noeud du réseau, par au moins un autre numéro de système autonome noté new-asn1 ;
- un module de vérification 5B, configuré pour vérifier s'il existe :
   au moins une session BGP active entre cet autre noeud du réseau et le dispositif T, et dans laquelle l'autre noeud est associé au numéro de système autonome v-asn1 ; et/ou
   au moins une entrée associée au numéro de système autonome v-asn1 dans au moins une table de routage maintenue par le dispositif T pour la mise en oeuvre du protocole BGP dans le réseau ;
- un premier module de remplacement 5C activé s'il existe au moins une session active, et configuré pour remplacer le numéro de système autonome v-asn1 dans ladite au moins une session active par ledit au moins un numéro de système autonome new-asn1 ; et
- un second module de remplacement 5D, activé s'il existe au moins une entrée dans au moins une table de routage maintenue par le dispositif T, et configuré pour remplacer dans ladite au moins une table de routage le numéro de système autonome v-asn1 associé à ladite au moins une entrée par ledit au moins un numéro de système autonome new-asn1.

Dans le mode de réalisation décrit ici, le programme PROG5 définit en outre un module d'envoi 5E, activé s'il existe au moins une entrée associée au numéro de système autonome v-asn1 dans une table de routage contenant au moins une route annoncée par le dispositif T à au moins l'un de ses noeuds voisins dans le réseau R, ce module d'envoi 5E étant configuré pour envoyer le message de commande audit un desdits noeuds voisins du dispositif T.

Nous allons maintenant décrire plus en détail les fonctions des différents modules 4A-4D et 5A-5E des dispositifs T du réseau.

La **figure 4** représente les principales étapes d'un procédé de configuration selon l'invention, tel qu'il est mis en oeuvre par les modules 4A-4D d'un dispositif T du réseau R, dans un mode particulier de réalisation. Le dispositif T est par exemple ici, à titre illustratif, le dispositif T21.

On suppose que le dispositif T21 a été préalablement configuré lors d'une étape de configuration initiale (étape E00) avec le numéro d'AS 65001, de façon connue en soi. On suppose pour des besoins d'illustration que la configuration a été effectuée par le contrôleur 2 ; cette hypothèse n'est toutefois ni requise ni nécessaire pour la mise en oeuvre de l'invention. Une telle configuration peut ainsi être réalisée au moyen d'instructions envoyées par le contrôleur 2 au dispositif T21 via une interface INTERF utilisant par exemple une connexion Telnet ou SSH (Secure Shell) combinée à une syntaxe CLI (pour Command Line Interface), ou en utilisant le protocole NETCONF et le langage YANG (pour Yet Another Next Génération), etc. Le numéro d'AS 65001 est stocké dans la variable cur-asn de la configuration locale du dispositif T21, dans sa mémoire non volatile 10. Il s'agit du numéro d'AS courant utilisé par le dispositif T21 pour maintenir des sessions BGP au sein du réseau R.

Suite à cette configuration, le dispositif T21 utilise le numéro d'AS courant 65001 contenu dans la variable cur-asn sur le réseau R pour établir des sessions BGP avec ses voisins. Le numéro d'AS courant 65001 est un premier numéro d'AS au sens de l'invention. Dans l'exemple envisagé à la figure 1, le dispositif T21 établit ainsi une session BGP avec le dispositif T31 et une session BGP avec le dispositif T32 en présentant le numéro d'AS qui lui a été associé, à savoir 65001.

Le dispositif T21 utilise également ce numéro d'AS pour annoncer à son voisin des routes ou des préfixes pouvant être atteints par les routes annoncées.

A titre illustratif, ces différentes opérations menées par le dispositif T21 peuvent résulter d'instructions transmises par le contrôleur 2 via l'interface précitée dans un message de configuration conforme par exemple au formalisme suivant :
*Router bgp 65001*
*Network 1.0.0.0*/*8*
*Network 2.0.0.018*
*Neighbor @IP(T31) remote-as 65002*

Dans cet exemple, le contrôleur 2 demande au dispositif T21 qui agit comme un routeur BGP et dont le numéro d'AS courant est 65001 d'établir une session BGP avec son voisin le dispositif T31, dont l'adresse IP (Internet Protocol) est @IP(T31) et qui est associé au numéro d'AS 65002. Il demande également au dispositif T21 d'annoncer à son voisin T31 les préfixes 1.0.0.0/8 et 2.0.0.0/8 en indiquant son numéro d'AS 65001.

On suppose maintenant, comme évoqué précédemment, qu'une migration du numéro d'AS 65001, codé sur deux octets, est envisagée par l'opérateur du centre de données s'appuyant sur le réseau R, vers un numéro d'AS codé sur quatre octets, et plus particulièrement vers le numéro d'AS 4200000001 (deuxième numéro d'AS au sens de l'invention).

A cet effet, le contrôleur 2 envoie un message de configuration au dispositif T21 via l'interface INTERF pour lui notifier le nouveau numéro d'AS noté new-asn qu'il souhaite lui associer, c'est-à-dire le numéro d'AS cible vers lequel l'opérateur a décidé de migrer le dispositif T21 (c.-à-d. 4200000001).

Ce message de configuration comprend une commande CMD contenant une information représentative du nouveau numéro de système autonome new-asn=4200000001 destiné à être utilisé par le dispositif T21 en remplacement du numéro de système autonome courant 65001 qui lui est associé. Cette commande CMD est par exemple une commande « set new-asn » complétée par une information info-new-asn représentative du nouveau numéro d'AS new-asn que l'opérateur souhaite associer au dispositif T21 (c'est-à-dire « set new-asn info-new-asn »).

On note que si le dispositif T21 a été configuré lors de l'étape E00 avec plusieurs numéros d'AS distincts (autrement dit, plusieurs numéros d'AS courants v-asn1, v-asn2,..., renseignés respectivement dans des variables cur-asn1, cur-asn2,... de la configuration locale du dispositif T21, lui sont associés), la commande CMD peut en outre désigner le(s)quel(s) de ces numéros d'AS courants est ou sont destinés à être remplacés par le nouveau numéro d'AS new-asn. A cet effet, la commande CMD peut prendre par exemple la forme « set v-asn1 new-asn info-new-asn» pour indiquer que c'est le numéro d'AS courant dont la valeur est v-asn1 qui doit être remplacé par le numéro d'AS info-new-asn.

Par ailleurs, dans l'exemple envisagé ici, par souci de simplification, on suppose que la migration envisagée se fait vers un seul numéro d'AS. Toutefois, cette hypothèse n'est pas limitative et l'invention peut s'appliquer également lorsqu'on souhaite migrer le numéro d'AS courant d'un dispositif vers plusieurs numéros d'AS, auquel cas la commande CMD précise les différentes informations représentatives de chacun de ces différents numéros d'AS.

L'information info-new-asn représentative du nouveau numéro d'AS peut être de différentes natures. Il peut s'agir par exemple du nouveau numéro d'AS new-asn à proprement parler (c.-à-d., 4200000001 dans l'exemple envisagé ici), ou en variante, d'une différence Δ-asn (positive ou négative) entre le nouveau numéro d'AS new-asn et le numéro d'AS courant v-asn utilisé par le dispositif T21 (c.-à-d., (Δ-asn)=(new-asn)-(v-asn)).

Le dispositif T21 reçoit via son module de réception 4A le message de configuration envoyé par le contrôleur 2 et contenant la commande CMD (étape E10), et valide le message de configuration. En particulier, la validation consiste à vérifier que le contrôleur est habilité à émettre des consignes de migration de numéro d'AS, que le format du message de configuration est conforme au formalisme décrit précédemment (commande « set ... »), et que le nouveau numéro d'AS est un numéro d'AS valide.

Puis il obtient à partir du message de configuration, le nouveau numéro d'AS new-asn qui lui est attribué (soit directement à partir de l'information info-new-asn incluse dans le message de configuration, soit si cette information est une différence Δ-asn, en ajoutant cette différence à son numéro d'AS courant v-asn spécifié dans la variable cur-asn) (étape E20).

Dans le mode de réalisation décrit ici, la commande CMD envoyée dans le message de configuration par le contrôleur 2 au dispositif T21 contient en outre une indication d'un mode d'application, autrement dit d'utilisation, par le dispositif T21 du nouveau numéro d'AS new-asn qui lui est associé (étape E30). Ce mode d'application précise si l'utilisation du nouveau numéro d'AS new-asn par le dispositif T21 doit être immédiate ou différée. Ainsi, par exemple, la commande CMD peut préciser :
- un mode d'utilisation immédiate consistant à appliquer immédiatement le changement de numéro d'AS du dispositif T21, autrement dit, pour le dispositif T21 à remplacer immédiatement dans sa configuration locale dans la variable cur-asn le numéro d'AS v-asn=65001 par le nouveau numéro d'AS new-asn=4200000001, et à utiliser immédiatement ce nouveau numéro d'AS new-asn qui lui est associé dans les procédures BGP. Ce mode peut être activé par exemple via une commande de type « set new-asn info-new-asn immédiate », dans laquelle la séquence « immédiate » reflète l'application immédiate de la commande d'utilisation du numéro d'AS new-asn ;
- un mode d'utilisation immédiate avec préservation de l'ancien numéro d'AS pendant une certaine durée. En d'autres termes, le dispositif T21 stocke immédiatement dans sa configuration locale (dans la variable cur-asn), le nouveau numéro d'AS new-asn=4200000001 en remplacement du numéro d'AS 65001, tout en préservant dans une autre variable notée old-asn prévue à cette effet, son ancien numéro d'AS 65001 durant une période prédéterminée. Le dispositif T21 est configuré par ailleurs pour utiliser immédiatement le nouveau numéro d'AS new-asn qui lui est maintenant associé. Ce mode d'utilisation peut être activé par exemple via une commande prenant la forme « set new-asn info-new-asn immédiate preserve-old timer » dans laquelle la séquence « immédiate preserve-old timer» reflète l'application immédiate de la commande d'utilisation du numéro d'AS new-asn avec préservation de l'ancien numéro d'AS, la valeur « timer » définissant la durée pendant laquelle l'ancien numéro d'AS (c'est-à-dire le numéro d'AS 65001 dans l'exemple envisagé) doit être préservé dans la variable old-asn dans la configuration locale du dispositif T21 ;
- un mode d'utilisation différée avec indication d'une échéance à laquelle appliquer/utiliser le nouveau numéro d'AS. Cette échéance consiste en la détection d'un événement particulier indiqué dans le message de configuration. Un tel événement peut être par exemple un horodatage particulier (par exemple, le 31 octobre 2019 à 10h00), ou une durée de temporisation à respecter (par exemple, 10800 secondes), etc. Ce mode d'utilisation peut être activé par exemple via une commande prenant la forme « set new-asn info-new-asn event-type event event-value » dans laquelle la séquence « event-type event event-value » reflète l'application de la commande d'utilisation différée avec indication d'une échéance, « event » définissant le type d'événement à détecter et « event-value » la valeur de cet événement. Par exemple si l'événement est l'expiration d'une durée de temporisation, l'événement « event » peut être valorisé à la valeur « timer » (pour indiquer qu'une durée de temporisation doit être respectée) et la valeur « event-value » à la durée de cette temporisation (par exemple, 3600 pour 3600s). On note qu'une durée de temporisation nulle équivaut à un mode d'utilisation immédiate du nouveau numéro d'AS. Si l'événement est la détection d'un horodatage particulier, l'événement « event » peut être valorisé à la valeur « date » et la valeur « event-value » à la date et horaire effectifs d'application (i.e. d'utilisation) du nouveau numéro d'AS (par exemple, 2019-10-31T10:00Z).

Ces exemples de modes de réalisation ne sont donnés qu'à titre illustratif et d'autres modes ainsi que d'autres formalismes permettant de signaler ces modes peuvent être considérés.

On suppose ici, à titre illustratif, que la commande CMD précise un mode d'utilisation différée avec indication d'un événement de type horodatage.

Suite à l'obtention du nouveau numéro d'AS new-asn et du mode d'utilisation à appliquer, le dispositif T21 via son module de configuration 4B programme la mise à jour de sa configuration locale pour tenir compte du nouveau numéro d'AS new-asn (étape E40). Cette programmation dépend, dans le mode de réalisation décrit ici, du mode d'utilisation spécifié dans la commande CMD.

Plus particulièrement, lorsque le mode d'utilisation indiqué dans la commande CMD spécifie une utilisation immédiate (ou par défaut en l'absence d'un mode d'utilisation spécifié dans la commande), cette mise à jour est réalisée immédiatement par le module de configuration 4B : le module de configuration 4B remplace dans la variable cur-asn de la configuration locale du dispositif T21 la valeur v-asn=65001 par la valeur new-asn=4200000001.

Lorsque le mode d'utilisation indiqué dans la commande CMD spécifie une utilisation immédiate avec préservation de l'ancien numéro d'AS, comme mentionné précédemment, le module de configuration 4B copie la valeur v-asn=65001 contenue dans la variable cur-asn dans une variable old-asn maintenue dans la configuration locale, puis remplace dans la variable cur-asn la valeur v-asn=65001 par la valeur new-asn=4200000001. La variable old-asn est maintenue égale à la valeur 65001 pendant la durée spécifiée dans la commande CMD. Au-delà de cette durée, la valeur 65001 est supprimée ou effacée.

Lorsque le mode d'utilisation indiqué dans la commande CMD spécifie une utilisation différée avec indication d'une échéance consistant en la détection d'un événement particulier, le module de configuration 4B programme la mise à jour de la configuration locale du dispositif T21, et notamment le remplacement dans cette configuration locale de la valeur v-asn stockée dans la variable cur-asn par la valeur new-asn, pour que celle-ci soit mise en oeuvre automatiquement sur détection de l'événement particulier spécifié dans la commande CMD. Par exemple si cet événement est un horodatage, la mise à jour de la configuration locale est programmée pour être exécutée sur détection de cet horodatage par le dispositif T21.

En variante, la mise à jour de la configuration locale peut être réalisée en amont de la détection de l'événement mais n'être activée qu'à compter de cette détection.

On note qu'une fois sa configuration locale mise à jour, le dispositif T21 est programmé pour utiliser dans ses sessions BGP (futures et en cours) et pour annoncer via le protocole BGP des routes et/ou des préfixes sur le réseau R (c.-à-d., dans l'attribut AS_PATH des messages BGP qu'il échange avec ses voisins), le numéro d'AS contenu dans la variable cur-asn mise à jour, autrement dit, le numéro d'AS new-asn. Il n'utilise plus à compter de cette mise à jour (ou de son activation) son ancien numéro d'AS v-asn.

Puis le dispositif T21 identifie, par l'intermédiaire de son module d'identification 4C, les noeuds du réseau R avec lesquels il maintient une session BGP active associée à son numéro d'AS v-asn (autrement dit au numéro d'AS avec lequel il était configuré avant la mise à jour de sa configuration) (étape E50). Dans l'exemple envisagé ici, le dispositif T21 entretient des sessions BGP actives associées à son numéro d'AS v-asn avec les noeuds T31 et T32. Il identifie donc, lors de l'étape E50, les dispositifs T31 et T32 (deuxièmes noeuds au sens de l'invention).

Le dispositif T21 envoie alors, via son module d'envoi 4D, à chacun des dispositifs identifiés, un message de commande les informant de la migration de son numéro d'AS (étape E60) : ce message de commande requiert le remplacement par ces dispositifs du numéro d'AS v-asn associé au noeud T21 par son nouveau numéro d'AS new-asn, notamment dans les sessions BGP actives qu'il entretient avec eux.

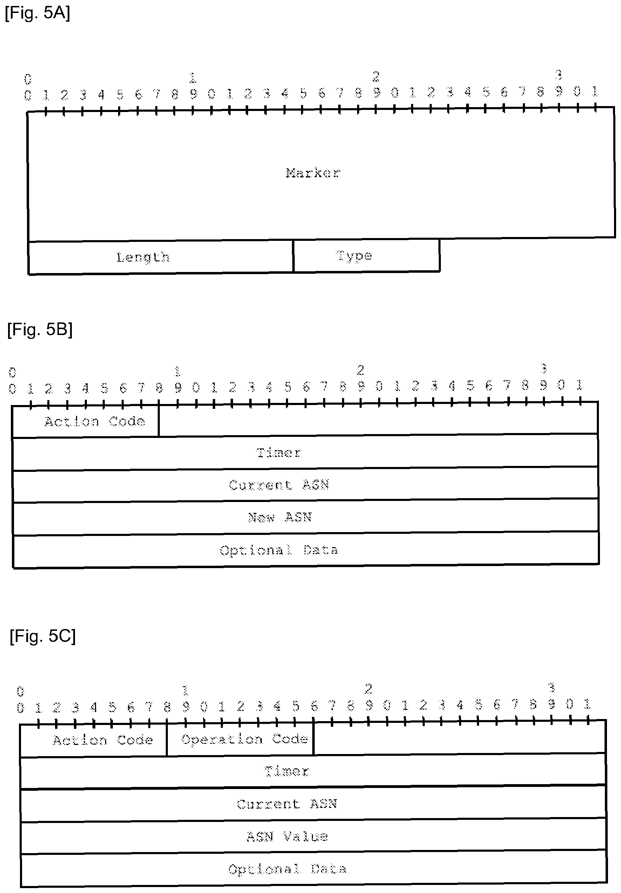

Dans le mode de réalisation décrit ici, le message de commande envoyé par le dispositif T21 est un message ACTION, précédé par un entête générique BGP tel qu'illustré par la **figure 5A** et décrit en détail dans le document RFC 4271 édité par l'IETF. Le champ Type qui indique le type de message BGP considéré est valorisé par exemple à la valeur 5, valeur nouvellement définie par rapport aux valeurs 1 à 4 décrites dans le document RFC 4271 pour préciser qu'il s'agit d'un message de type ACTION.

Le message de commande ACTION comprend par ailleurs une pluralité de champs ou de paramètres comme illustré par la **figure 5B** et plus particulièrement :
- un paramètre « Current ASN » renseignant le numéro d'AS à remplacer, à savoir, dans l'exemple envisagé ici, v-asn=65001 ;
- un paramètre « New ASN » renseignant le nouveau numéro d'AS à prendre en compte, à savoir, dans l'exemple envisagé ici, new-asn=4200000001. On note que, si une pluralité de nouveaux numéros d'AS est envisagée, ce paramètre peut comprendre ladite pluralité de nouveaux numéros d'AS. En variante, un message ACTION distinct pour chaque nouveau numéro d'AS peut être utilisé ; et
- un paramètre « Event » ou « Timer » renseignant l'échéance à respecter pour procéder au remplacement effectif du numéro d'AS renseigné dans le paramètre « Current ASN ». Une valeur du paramètre « Event » ou « Timer » à 0 signifie une activation ou prise en compte immédiate du nouveau numéro d'AS.

On note que le message ACTION est un nouveau message qui n'existe pas dans la version actuelle du protocole BGP.

Dans l'exemple de la figure 5B, le message ACTION comprend en outre un champ « Action Code » définissant la nature de l'action à entreprendre par le dispositif destinataire du message ACTION. Ce champ est par exemple valorisé à 0 pour indiquer une action de migration de numéros d'AS, autrement dit, le message ACTION requiert le remplacement par le dispositif qui le reçoit d'un numéro d'AS tel que spécifié dans les paramètres du message.

On note que la présence de ce champ est optionnelle et permet d'utiliser le message ACTION pour ordonner d'autres actions aux noeuds du réseau R. En variante, on peut envisager que le type même du message (message ACTION) indique au dispositif qui le reçoit qu'il doit remplacer le numéro d'AS spécifié dans le champ « Current ASN » par le numéro d'AS spécifié dans le champ « New ASN ».

Le message ACTION représenté à la figure 5B comprend également un champ « Optional Data » permettant de renseigner d'autres données telles qu'une liste de voisins avec lesquels la procédure doit être mise en oeuvre. D'autres informations peuvent être envisagées.

Un second exemple plus général de format du message ACTION est illustré par la **figure 5C****.** Les champs qui portent le même nom que ceux définis à la figure 5B ont la même signification qu'à la figure 5B.

Contrairement au format illustré par la figure 5B, le message ACTION de la figure 5C ne comprend pas directement le nouveau numéro d'AS à utiliser mais des informations permettant de déterminer ce nouveau numéro d'AS.

Plus spécifiquement, le message ACTION illustré par la figure 5C comprend un champ « Operation Code » renseigné avec le code d'une opération à appliquer pour obtenir le nouveau numéro d'AS en utilisant comme variables d'entrée les paramètres renseignés dans des champs « Current ASN » et « ASN Value ». Les codes d'opération suivants peuvent par exemple être définis :
- « 0 » : aucune opération à effectuer, c.-à-d., la valeur comprise dans le champ « ASN Value » correspond au nouveau numéro d'AS à utiliser ;
- « 1 » : une addition doit être réalisée, c.-à-d., le nouveau numéro d'AS est obtenu en ajoutant la valeur comprise dans le champ « Current ASN » à la valeur comprise dans le champ « ASN Value » ;
- « 2 » : une soustraction doit être réalisée, c.-à-d., le nouveau numéro d'AS est obtenu en soustrayant à la valeur comprise dans le champ « Current ASN » la valeur comprise dans le champ « ASN Value » ;
- « 3 » : une multiplication doit être réalisée, c.-à-d., le nouveau numéro d'AS est obtenu en multipliant la valeur comprise dans le champ « Current ASN » par la valeur comprise dans le champ « ASN Value » ;
- etc.

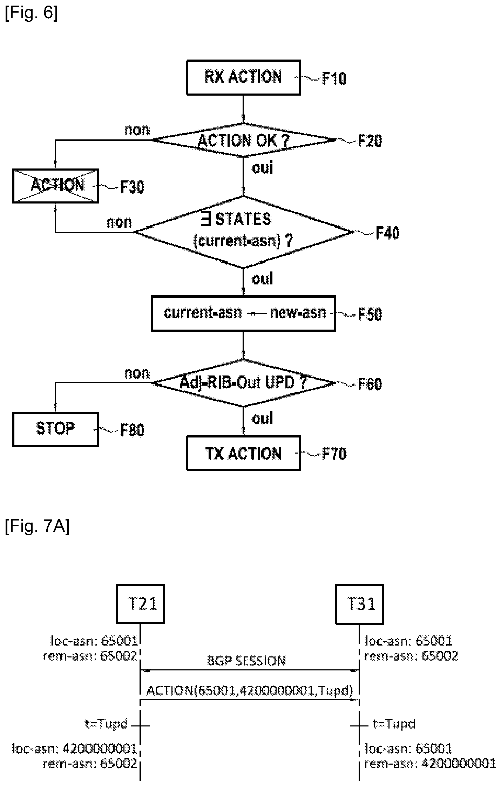

Nous allons maintenant décrire, en référence à la **figure 6****,** les différentes étapes du procédé de traitement selon l'invention, telles que mises en oeuvre par chacun des dispositifs T31 et T32 sur réception du message ACTION envoyé par le dispositif T21, dans un mode particulier de réalisation. Dans la suite de la description, on s'intéresse uniquement au dispositif T31, le dispositif T32 mettant en oeuvre les mêmes étapes que le dispositif T31.

Sur réception du message ACTION par l'intermédiaire de son module 5A (étape F10), le dispositif T31 procède, dans le mode de réalisation décrit ici, à une validation de ce message (étape test F20). Cette validation consiste en un ou plusieurs contrôles de sécurité permettant notamment de vérifier l'intégrité et l'authenticité du message ACTION (selon les modalités d'usage décrites dans la RFC4271), mais aussi si le voisin est habilité à émettre le message ACTION. En variante, d'autres contrôles peuvent être envisagés, portant par exemple sur le respect d'une fréquence d'envoi de messages ACTION parvenant au dispositif T31 (pour éviter une instabilité du protocole BGP), etc.

Si le message n'est pas validé (réponse « non » à l'étape test F20), celui-ci est rejeté et aucune action n'est entreprise par le dispositif T31 (étape F30).

Si le message est validé (réponse « oui » à l'étape test F20), le dispositif T31 vérifie, par l'intermédiaire de son module de vérification 5B, s'il maintient des états associés à l'ancien numéro d'AS du dispositif T21, autrement dit au numéro d'AS spécifié dans le champ « Current ASN » du message ACTION reçu du dispositif T21 (étape test F40). Par « maintenir des états associés à l'ancien numéro d'AS », on entend des états reflétant une ou des sessions BGP actives associés à ce numéro d'AS ou des entrées de tables, et en particulier de tables de routage ou RIB (pour Routing Information Base) utilisées par le protocole BGP, et associées à ce numéro d'AS.

Plus spécifiquement, le module de vérification 5B du dispositif T31 vérifie, lors de l'étape F40 s'il existe :
- au moins une session BGP active entre le dispositif T21 et le dispositif T31 dans laquelle le dispositif T21 est associé au numéro d'AS identifié dans le champ « Current ASN » du message ACTION (autrement dit, dans l'exemple envisagé ici, au numéro d'AS 65001) ; et/ou
- au moins une entrée associée au numéro d'AS identifié dans le champ « Current ASN » du message ACTION, c'est-à-dire au numéro d'AS 65001, dans au moins une table de routage maintenue par le dispositif T31, par exemple dans sa mémoire non volatile 10, pour la mise en oeuvre du protocole BGP dans le réseau R. Une telle table de routage peut être par exemple une table de routage locale de type Loc-RIB, maintenue par le dispositif T31 dans sa mémoire non volatile 10, une table de routage de type Adj-RIB-In consignant les routes reçues de ses voisins (dans les messages BGP UPDATE transitant sur le réseau R), ou encore une table de routage de type Adj-RIB-Out contenant les routes que le dispositif T31 annonce vers ses voisins.

Si le dispositif T31 n'identifie aucune session active associée au numéro d'AS 65001 ni aucune entrée dans l'une de ses tables de routage associée à ce numéro d'AS (réponse « non » à l'étape test F40), alors le message ACTION est ignoré et aucune action n'est entreprise par le dispositif T31 (étape F30).

Si une session BGP active entre le dispositif T21 et le dispositif T31 est détectée par le module de vérification 5B (réponse « oui » à l'étape test F40), alors le dispositif T31, via son premier module de remplacement 5C, met à jour sa configuration locale en remplaçant dans l'état correspondant à cette session active, le numéro d'AS 65001 par le nouveau numéro d'AS new-asn=4200000001 associé au dispositif T21 et obtenu du message ACTION (étape F50).

Si une entrée associée au numéro d'AS 65001 est détectée par le module de vérification 5B dans l'une des tables de routage maintenues par le dispositif T31 (réponse « oui » à l'étape test F40), alors le dispositif T31, via son deuxième module de remplacement 5D, met à jour sa configuration locale en remplaçant dans la table de routage le numéro d'AS 65001 associé à cette entrée par le nouveau numéro d'AS new-asn=4200000001 (étape F50).

On note que si le message ACTION comprend une indication d'une échéance à respecter pour effectuer le remplacement du numéro d'AS 65001 par le nouveau numéro d'AS 4200000001, la mise à jour de la configuration locale du dispositif T31, ou tout du moins l'activation de la configuration mise à jour avec le nouveau numéro d'AS est programmée pour être exécutée automatiquement à cette échéance. Avant ladite échéance, le dispositif T21 reste associé dans la session active et/ou pour l'entrée en question au numéro d'AS 65001.

La **figure 7A** illustre l'étape de remplacement mise en oeuvre par le premier module de remplacement 5C et la mise à jour dans la configuration locale du dispositif T31 de l'état correspondant à une session active entre le dispositif T21 et le dispositif T31. Cette session active a été établie alors que le dispositif T21 était associé au numéro d'AS 65001 et le dispositif T31 au numéro d'AS 65002. L'état correspondant à cette session active maintenu par le dispositif T21 reflète donc comme numéro d'AS local (référencé par loc-asn) le numéro d'AS 65001 et comme numéro d'AS distant (référencé par rem-asn) le numéro d'AS 65002. Pour cette même session active, l'état correspondant maintenu par le dispositif T31 reflète comme numéro d'AS local le numéro d'AS 65002 et comme numéro d'AS distant le numéro d'AS 65001.

Suite à la réception d'un message ACTION transmis par le dispositif T21 au dispositif T31 contenant l'ancien numéro d'AS 65001, le nouveau numéro d'AS 4200000001 associé au dispositif T21 et l'échéance Tupd à laquelle la migration du numéro d'AS associé au dispositif T21 de l'ancien numéro 65001 vers le nouveau numéro 4200000001 doit être exécutée, l'état correspondant à la session BGP active est mis à jour par le dispositif T31 lorsque l'échéance est détectée (c.-à-d., à t=Tupd) : l'état mis à jour reflète alors comme numéro d'AS local le numéro d'AS 65002 et comme numéro d'AS distant le numéro d'AS 4200000001. On note qu'à cette même échéance, l'état correspondant à la session BGP active est également mis à jour par le dispositif T21 et reflète alors comme numéro d'AS local le numéro d'AS 4200000001 et comme numéro d'AS distant le numéro d'AS 65002.

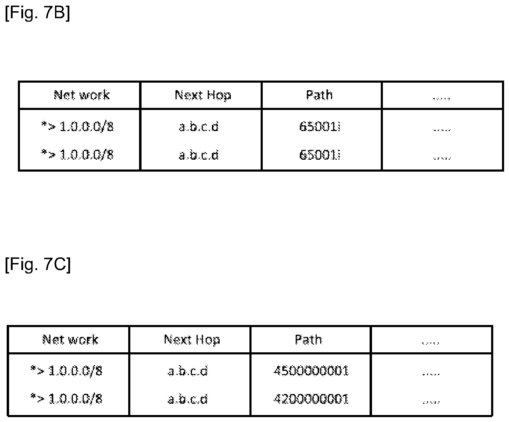

Les **figures 7B et 7C** illustrent l'étape de remplacement, telle que mise en oeuvre par le deuxième module de remplacement 5D, et la mise à jour dans la configuration locale du dispositif T31 d'une table de routage comprenant une entrée associée au numéro d'AS 65001.

La figure 7B représente un extrait de la table de routage avant migration du numéro d'AS associé au dispositif T21. Les trois premières colonnes de la table reflètent respectivement le préfixe réseau, l'adresse IP du voisin pour joindre ledit préfixe réseau, et la liste des AS à traverser pour joindre ledit préfixe (reflétant le contenu de l'attribut AS_PATH).

La figure 7C représente le même extrait de la table de routage après migration du numéro d'AS associé au dispositif T21 vers le numéro d'AS 4200000001.

Dans le mode de réalisation décrit ici, si le module de vérification 5B a trouvé l'existence lors de l'étape F40 d'une entrée dans une table de routage (Adj-RIB-Out) contenant une route annoncée par le dispositif T31 à au moins un de ses dispositifs voisins (réponse « oui » à l'étape test F60), le module d'envoi 5E du dispositif T31 envoie le message de commande ACTION à ce ou ces dispositifs voisins pour les informer de la migration du numéro d'AS du dispositif T21 et leur permettre à leur tour de mettre à jour leur(s) table(s) de routage (étape F70).

Sinon (réponse « non » à l'étape test F60), le procédé de traitement mis en oeuvre par le dispositif T31 s'achève (étape F80).

On note que lorsque le message ACTION est relayé par le dispositif T31 vers des voisins lors de l'étape F70, si ce message ACTION contient une valeur d'horodatage comme échéance de la migration, la même valeur d'horodatage est maintenue dans le message ACTION relayé vers les voisins du dispositif T31.

Dans le cas où une durée de temporisation est comprise dans le message ACTION pour indiquer l'échéance à respecter pour la migration du numéro d'AS (autrement dit avant d'appliquer le nouveau numéro d'AS associé au dispositif T21), le module d'envoi 5E du dispositif T31 procède à une modification de cette durée de temporisation avant d'envoyer le message ACTION pour assurer une synchronisation entre les noeuds du réseau R concernés par la migration du numéro d'AS. Plus particulièrement, le module d'envoi 5E décrémente la valeur de la durée de temporisation de la durée de traitement du message ACTION par le dispositif T31 et de la durée d'acheminement du message ACTION entre le dispositif T31 et ses dispositifs voisins. La durée d'acheminement entre le dispositif T31 et ses dispositifs voisins peut être configurée sur chacun des dispositifs par un contrôleur au préalable, ou être obtenue en utilisant une méthode telle que l'envoi de messages ICMP Echo Request (RFC792) à destination des dispositifs voisins.

Sur réception du message ACTION, les voisins du dispositif T31 mettent en oeuvre à leur tour les différentes étapes du procédé de traitement selon l'invention. On s'assure ainsi que la migration du numéro d'AS associé au dispositif T21 se fait automatiquement par tous les noeuds du réseau R notifiés à l'échéance indiquée dans les messages ACTION, et ce, sans affecter les sessions BGP en cours. Ainsi, grâce à l'invention, aucune indisponibilité du service n'est à craindre.

Dans l'exemple illustratif envisagé ici, comme mentionné précédemment, on a supposé que l'opérateur du centre de données s'appuyant sur le réseau R a décidé la migration des numéros d'AS associés aux dispositifs du réseau d'un format codé sur 2 octets vers un format codé sur 4 octets. Nous venons de décrire en référence aux figures 4 à 7 les étapes mises en oeuvre par les dispositifs du réseau R pour réaliser la migration d'un numéro d'AS associé à un seul dispositif du réseau, à savoir du numéro d'AS 65001 codé sur deux octets associé au dispositif T21 vers le numéro d'AS 4200000001 codé sur quatre octets. Plusieurs stratégies peuvent être retenues par l'opérateur du centre de données pour procéder à la migration de plusieurs numéros d'AS au sein du réseau R. Ces différentes stratégies sont pilotées par exemple par le contrôleur 2 qui communique à chacun des dispositifs concernés les instructions de configuration nécessaires pour la migration.

Une première stratégie consiste à procéder successivement pour chaque numéro d'AS concerné par la migration : autrement dit, la migration d'un seul numéro d'AS à la fois est exécutée dans le réseau R. Selon cette première stratégie, lorsque des migrations de plusieurs numéros d'AS distincts sont envisagées, le contrôleur 2 est configuré pour envoyer successivement aux dispositifs du réseau R configurés avec ces numéros d'AS distincts, des messages de configuration CMD comprenant les numéros d'AS vers lesquels ils doivent migrer, le contrôleur 2 étant configuré pour attendre, après avoir envoyé un message de configuration destiné à remplacer un numéro d'AS désigné par exemple par v-asn1 à un ou plusieurs dispositifs du réseau R associés à ce numéro d'AS v-asn1, le remplacement effectif de ce numéro d'AS v-asn1 dans le réseau R (autrement dit dans le système de communication 1) avant d'envoyer un message de configuration destiné à remplacer un numéro d'AS désigné par exemple par v-asn2.

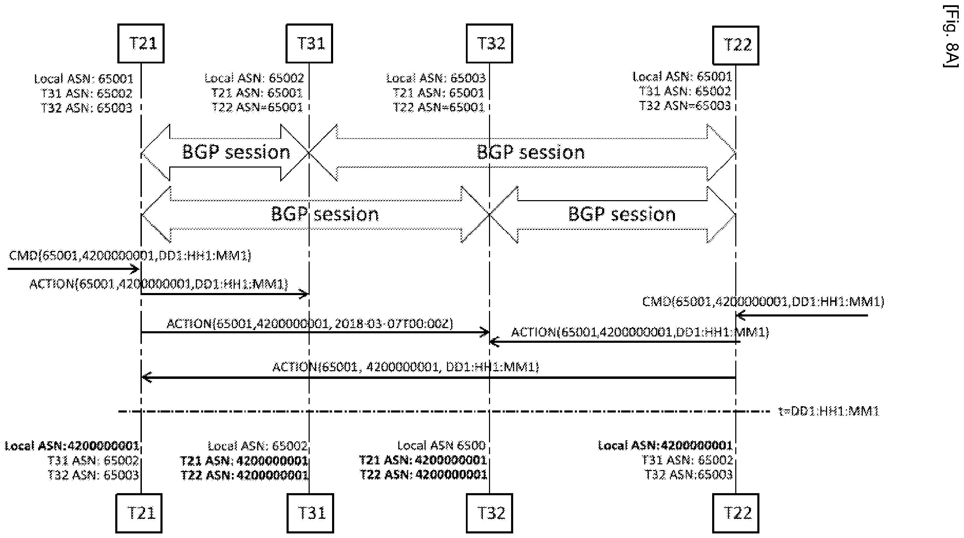

Les **figures 8A à 8C** illustrent cette première stratégie de migration des numéros d'AS les uns après les autres.

Plus précisément, la figure 8A représente une première étape de migration consistant en la migration du numéro d'AS 65001 associé aux dispositifs T21 et T22 vers le numéro d'AS 420000001. Le contrôleur 2 envoie aux dispositifs T21 et T22 un message de configuration CMD contenant le numéro d'AS 4200000001 vers lequel migrer le numéro d'AS 65001 auquel ils sont tous les deux associés et une indication de l'échéance à laquelle réaliser cette migration. Cette indication est dans l'exemple illustré un horodatage DD:HH:MM.

Sur réception du message de configuration CMD, les dispositifs T21 et T22 transmettent un message de commande ACTION aux dispositifs T31 et T32 avec lesquels ils ont des sessions BGP actives. Ce message de commande comprend leur nouveau numéro d'AS ainsi que l'horodatage DD1:HH1:MM1.

A compter de l'horodatage DD1:HH1:MM1, le nouveau numéro d'AS 4200000001 est effectif dans les configurations locales des différents dispositifs T21, T22, T31 et T32 du système de communication 1. Une fois le système de communication 1 stabilisé à l'issue de l'exécution de la migration du numéro d'AS 65001 vers 4200000001, le contrôleur 2 peut déclencher une nouvelle migration consistant à remplacer le numéro d'AS 65002 associé au dispositif T31 par le numéro d'AS 4200000002.

L'exécution réussie de la migration peut être déterminée selon différentes méthodes. A titre d'exemple, le contrôleur peut récupérer la configuration BGP des dispositifs T21 et T22 et de leurs voisins pour vérifier que le nouveau numéro d'AS a été correctement pris en compte. Aussi, le contrôleur peut récupérer les tables de routage des dispositifs du réseau R et vérifier que le nouveau numéro d'AS est utilisé dorénavant pour caractériser des routes (colonne 'Path' des figures 7). Alternativement, le contrôleur peut recevoir des notifications du dispositif concerné par la migration pour rendre compte des résultats de l'opération de migration.

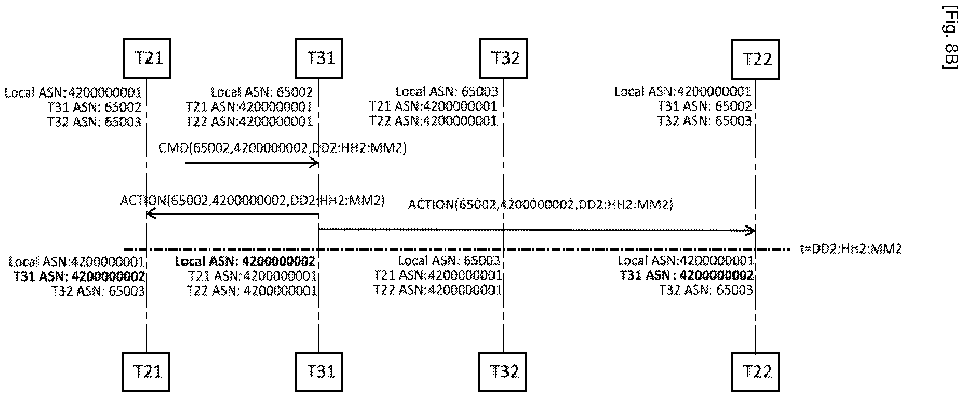

La figure 8B représente la deuxième étape de migration mise en oeuvre par le contrôleur 2. Cette étape consiste en la migration du numéro d'AS 65002 vers le numéro d'AS 420000002. Le contrôleur 2 envoie au dispositif T31 un message de configuration CMD contenant le numéro d'AS 4200000002 vers lequel migrer le numéro d'AS 65002 auquel il est associé et une indication de l'échéance DD2:HH2:MM2 à laquelle réaliser cette migration.

Sur réception du message de configuration CMD, le dispositif T31 transmet un message de commande ACTION aux dispositifs T21 et T22 avec lesquels il maintient des sessions BGP actives. Ce message de commande comprend son nouveau numéro d'AS 4200000002 ainsi que l'horodatage DD2:HH2:MM2.

A compter de l'horodatage DD2:HH2:MM2, le nouveau numéro d'AS 4200000002 est effectivement intégré dans les configurations locales des différents dispositifs T21, T22, et T31 du système de communication 1. Une fois le système de communication 1 stabilisé à l'issue de l'exécution de la migration du numéro d'AS 65002 vers 4200000002, le contrôleur 2 peut déclencher une nouvelle migration consistant à remplacer le numéro d'AS 65003 associé au dispositif T32 par le numéro d'AS 4200000003.

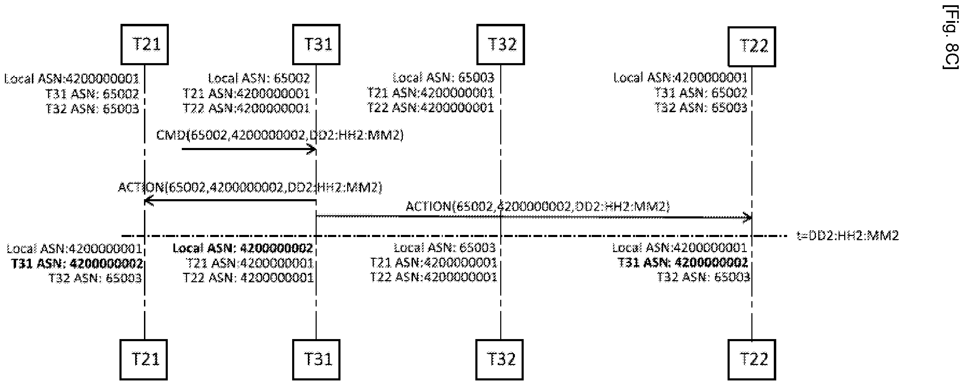

La figure 8C représente la troisième et ultime étape de migration mise en oeuvre par le contrôleur 2 ; cette étape consiste en la migration du numéro d'AS 65003 vers le numéro d'AS 420000003. Le contrôleur 2 envoie au dispositif T32 associé au numéro d'AS 65003 un message de configuration CMD contenant le numéro d'AS 4200000003 vers lequel migrer le numéro d'AS 65003 et une indication de l'échéance DD3:HH3:MM3 à laquelle réaliser cette migration.

Sur réception du message de configuration CMD, le dispositif T32 transmet un message de commande ACTION aux dispositifs T21 et T22 avec lesquels il maintient des sessions BGP actives. Ce message de commande comprend son nouveau numéro d'AS 4200000003 ainsi que l'horodatage DD3:HH3:MM3.

A compter de l'horodatage DD3:HH3:MM3, le nouveau numéro d'AS 4200000003 est effectif dans les configurations locales des différents dispositifs T21, T22, et T32 du système de communication 1.

Une seconde stratégie peut être envisagée par l'opérateur du centre de données pour migrer une pluralité de numéros d'AS, consistant à procéder à la migration simultanée des différents numéros d'AS. Autrement dit, le contrôleur 2 indique aux dispositifs concernés par la migration la même échéance pour effectuer le remplacement de leurs numéros d'AS.

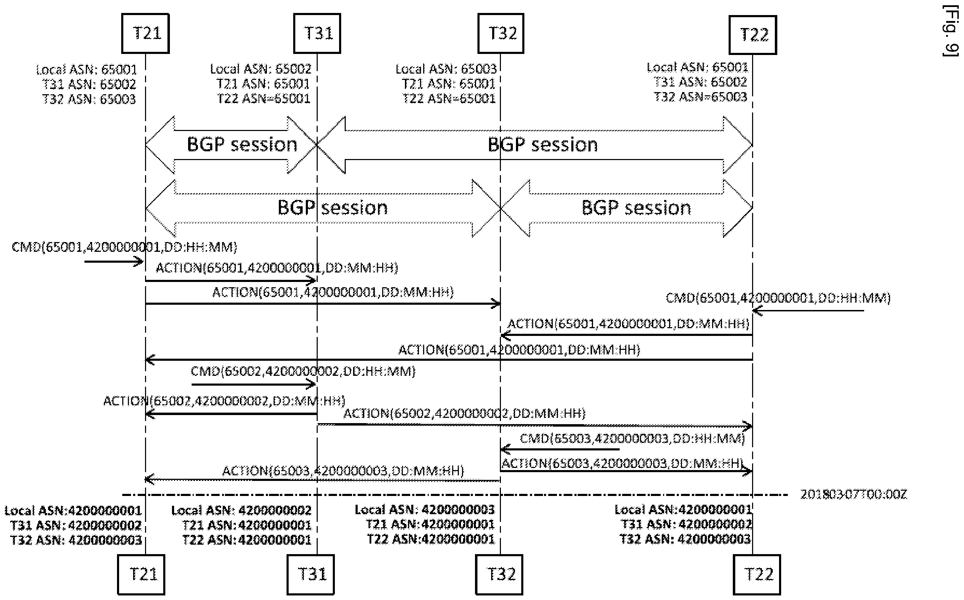

Cette seconde stratégie est illustrée par la **figure 9****.**

Conformément à cette seconde stratégie, le contrôleur 2 transmet (simultanément ou non) des messages de configuration CMD aux dispositifs T21, T22, T31 et T32 comprenant les numéros d'AS respectifs vers lesquels ils doivent migrer (autrement dit par lesquels ils doivent remplacer les numéros d'AS auxquels ils sont associés) et une même échéance à laquelle ces migrations doivent être exécutées (dans l'exemple envisagé, un même horodatage DD:HH:MM).

Sur réception du message de configuration CMD qui lui est destiné, les dispositifs T21 et T22 envoient un message ACTION aux dispositifs T31 et T32 contenant leur numéro d'AS courant 65001, leur nouveau numéro d'AS 4200000001 et l'horodatage DD:HH:MM de l'exécution du remplacement de leur numéro d'AS.

De façon similaire, sur réception du message de configuration CMD qui lui est destiné, le dispositif T31 envoie un message ACTION aux dispositifs T21 et T22 contenant son numéro d'AS courant 65002, son nouveau numéro d'AS 4200000002 et l'horodatage DD:HH:MM de l'exécution du remplacement de son numéro d'AS.

De même, sur réception du message de configuration CMD qui lui est destiné, le dispositif T32 envoie un message ACTION aux dispositifs T21 et T22 contenant son numéro d'AS courant 65003, son nouveau numéro d'AS 4200000003 et l'horodatage DD:HH:MM de l'exécution du remplacement de son numéro d'AS.

A compter de l'horodatage DD:HH:MM, les nouveaux numéros d'AS 4200000001, 4200000002 et 4200000003 sont effectifs dans les configurations locales des différents dispositifs T21, T22, T31 et T32 du système de communication 1.

Dans l'exemple envisagé à titre illustratif ici, on a considéré la migration de numéros d'AS en raison d'un changement de format de ces derniers, et telle que décidée par l'opérateur du centre de données. Toutefois, comme mentionné précédemment, d'autres raisons peuvent être envisagées pour la migration d'un ou de plusieurs numéros d'AS associés à des dispositifs du système de communication 1. Ainsi, une telle migration peut résulter par exemple de la fusion de systèmes autonomes (par exemple des systèmes autonomes 65002 et 65003 dans l'exemple de la figure 1), etc.

## Revendications

1. Procédé de configuration d'un premier noeud d'un réseau utilisant un premier numéro de système autonome dans au moins une session établie avec un autre noeud du réseau et conforme à un protocole de routage dynamique mis en oeuvre dans le réseau, ledit procédé comprenant les étapes suivantes mises en oeuvre par le premier noeud :
- une étape de réception (E10) d'un message de configuration (CMD) comprenant au moins une information représentative d'au moins un deuxième numéro de système autonome destiné à être utilisé par le premier noeud en remplacement du premier numéro de système autonome ;
- une étape de configuration (E40) dudit premier noeud avec ledit au moins un deuxième numéro de système autonome ;
- une étape d'identification (E50) d'au moins un deuxième noeud du réseau ayant au moins une session, conforme audit protocole de routage dynamique, active avec le premier noeud, dans laquelle le premier noeud est associé au premier numéro de système autonome ; et une étape d'envoi (E60) audit au moins un deuxième noeud, d'un message de commande (ACTION) requérant le remplacement par ledit au moins un deuxième noeud dudit premier numéro de système autonome associé audit premier noeud par ledit au moins un deuxième numéro de système autonome de sorte qu'après ledit remplacement, le premier noeud est associé à un dit deuxième numéro de système autonome dans ladite au moins une session active.

2. Procédé de configuration selon la revendication 1 dans lequel, lors de l'étape de configuration, le premier noeud est configuré pour utiliser immédiatement sur ledit réseau ledit au moins un deuxième numéro de système autonome.

3. Procédé de configuration selon la revendication 1 dans lequel, lors de l'étape de configuration, le premier noeud est configuré pour utiliser sur ledit réseau ledit au moins un deuxième numéro de système autonome de façon différée sur détection d'un événement prédéterminé indiqué dans le message de configuration.

4. Procédé de configuration selon la revendication 3 dans lequel le message de commande comprend une indication d'une échéance à respecter par ledit au moins un deuxième noeud pour remplacer ledit premier numéro de système autonome associé audit premier noeud par ledit au moins un deuxième numéro de système autonome.

5. Procédé de configuration selon l'une quelconque des revendications 1 à 4 dans lequel ladite au moins une information représentative dudit au moins un deuxième numéro de système autonome comprend :
- ledit au moins deuxième numéro de système autonome ; ou
- au moins une différence entre ledit au moins un deuxième numéro de système autonome et ledit premier numéro de système autonome.

6. Procédé de traitement d'un message de commande (ACTION) requérant un remplacement d'un premier numéro de système autonome associé à un premier noeud d'un réseau mettant en oeuvre un protocole de routage dynamique, par au moins un deuxième numéro de système autonome, ledit procédé de traitement étant mis en oeuvre par un deuxième noeud du réseau et comprenant :
- une étape de vérification (F40) s'il existe :
- au moins une session active entre le premier noeud et le deuxième noeud conforme au protocole de routage dynamique et dans laquelle le premier noeud est associé au premier numéro de système autonome ; et/ou
- au moins une entrée associée au premier numéro de système autonome dans au moins une table de routage maintenue par le deuxième noeud pour la mise en oeuvre du protocole de routage dynamique dans le réseau ;
- s'il existe au moins une session active, une étape de remplacement (F50) du premier numéro de système autonome associé au premier noeud dans ladite au moins une session active par ledit au moins un deuxième numéro de système autonome ; et
- s'il existe au moins une entrée dans au moins une table de routage maintenue par le deuxième noeud, une étape de remplacement (F50) dans ladite au moins une table de routage du premier numéro de système autonome associé à ladite au moins une entrée par ledit au moins un deuxième numéro de système autonome.

7. Procédé de traitement selon la revendication 6 dans lequel le message de commande comprend une indication d'une échéance à respecter par ledit au moins un deuxième noeud pour remplacer le premier numéro de système autonome par ledit au moins un deuxième numéro de système autonome, lesdites étapes de remplacement étant programmées pour être exécutées à ladite échéance.

8. Procédé de traitement selon la revendication 6 ou 7 comprenant en outre, s'il existe au moins une entrée associée au premier numéro de système autonome dans une table de routage contenant au moins une route annoncée par le deuxième noeud à au moins un troisième noeud du réseau voisin du deuxième noeud (F60), une étape d'envoi (F70) du message de commande audit au moins un troisième noeud.

9. Procédé de traitement selon la revendication 8 comprenant en outre, lorsque le message de commande reçu par le deuxième noeud comprend une durée de temporisation à respecter avant d'appliquer ledit au moins un deuxième numéro de système autonome, une étape de décrémentation avant d'envoyer le message de commande audit au moins un troisième noeud, de la durée de temporisation d'une durée de traitement du message de commande par le deuxième noeud et d'une durée d'acheminement du message de commande entre le deuxième noeud et ledit au moins un troisième noeud.

10. Programme d'ordinateur (PROG4,PROG5) comportant des instructions pour l'exécution des étapes du procédé de configuration selon l'une quelconque des revendications 1 à 5 ou pour l'exécution des étapes du procédé de traitement selon l'une quelconque des revendications 6 à 9 lorsque ledit programme est exécuté par un ordinateur.

11. Support d'enregistrement lisible par un ordinateur sur lequel est enregistré un programme d'ordinateur conforme à la revendication 10.

12. Dispositif (T21) d'un réseau, dit premier noeud, configuré pour utiliser un premier numéro de système autonome dans au moins une session établie avec un autre noeud du réseau et conforme à un protocole de routage dynamique mis en oeuvre dans le réseau, ledit premier noeud comprenant :
- un module de réception (4A,11), apte à recevoir un message de configuration comprenant au moins une information représentative d'au moins un deuxième numéro de système autonome destiné à être utilisé par le premier noeud en remplacement du premier numéro de système autonome ;
- un module de configuration (4B) paramétré pour configurer le premier noeud avec ledit au moins un deuxième numéro de système autonome ;
- un module d'identification (4C) configuré pour identifier au moins un deuxième noeud du réseau ayant au moins une session conforme au protocole de routage dynamique active avec le premier noeud, dans laquelle le premier noeud est associé au premier numéro de système autonome ; et
- un module d'envoi (4D, 11), configuré pour envoyer audit au moins un deuxième noeud, un message de commande requérant le remplacement par ledit au moins un deuxième noeud du premier numéro de système autonome associé audit premier noeud par ledit au moins un deuxième numéro de système autonome de sorte qu'après ledit remplacement, le premier noeud est associé à un dit deuxième numéro de système autonome dans ladite au moins une session active.

13. Dispositif d'un réseau (T31), dit deuxième noeud, configuré pour traiter un message de commande requérant un remplacement d'un premier numéro de système autonome associé à un premier noeud d'un réseau mettant en oeuvre un protocole de routage dynamique, par au moins un deuxième numéro de système autonome, ledit deuxième noeud comprenant :
- un module de vérification (5B), configuré pour vérifier s'il existe :
- au moins une session active entre le premier noeud et le deuxième noeud conforme au protocole de routage dynamique et dans laquelle le premier noeud est associé au premier numéro de système autonome ; et/ou
- au moins une entrée associée au premier numéro de système autonome dans au moins une table de routage maintenue par le deuxième noeud pour la mise en oeuvre du protocole de routage dynamique dans le réseau ;
- un premier module de remplacement (5C), activé s'il existe au moins une session active, et configuré pour remplacer le premier numéro de système autonome associé au premier noeud dans ladite au moins une session active par ledit au moins un deuxième numéro de système autonome ; et
- un second module de remplacement (5D), activé s'il existe au moins une entrée dans au moins une table de routage maintenue par le deuxième noeud, et configuré pour remplacer dans ladite au moins une table de routage le premier numéro de système autonome associé à ladite au moins une entrée par ledit au moins un deuxième numéro de système autonome.

14. Système de communication (1) dans un réseau mettant en oeuvre un protocole de routage dynamique et comprenant :-
- au moins un dispositif dit premier noeud, conforme à la revendication 12, configuré avec un premier numéro de système autonome et apte à recevoir un message de configuration comprenant au moins un deuxième numéro de système autonome destiné à être utilisé par le premier noeud sur le réseau ; et
- au moins un dispositif dit deuxième noeud, selon la revendication 13.

15. Système de communication selon la revendication 14 comprenant un contrôleur (2) et une pluralité de premiers noeuds conformes à la revendication 12 configurés avec desdits premiers numéros de système autonome, ledit contrôleur étant configuré, lorsque desdits premiers numéros de système autonome distincts doivent être remplacés par des deuxièmes numéros de système autonome, pour envoyer successivement auxdits premiers noeuds configurés avec ces premiers numéros de système autonome distincts les messages de configuration comprenant lesdits deuxièmes numéros de système autonome, ledit contrôleur étant configuré pour attendre après avoir envoyé un dit message de configuration destiné à remplacer un dit premier numéro de système autonome à au moins un dit premier noeud configuré avec ce premier numéro de système autonome, le remplacement effectif dudit premier numéro de système autonome dans le système de communication avant d'envoyer un message de configuration destiné à remplacer un autre dit premier numéro de système autonome à au moins un autre dit premier noeud configuré avec cet autre premier numéro de système autonome.

16. Système de communication selon la revendication 14 comprenant un contrôleur (2) et une pluralité de premiers noeuds conformes à la revendication 12 configurés avec desdits premiers numéros de système autonome, ledit contrôleur étant configuré, lorsque desdits premiers numéros de système autonome distincts associés auxdits premiers noeuds doivent être remplacés par des deuxièmes numéros de système autonome, pour inclure dans lesdits messages de configuration envoyés auxdits premiers noeuds une indication d'une même échéance à respecter pour chacun desdits premiers noeuds pour utiliser au sein du réseau lesdits deuxièmes numéros de système autonome en remplacement desdits premiers numéros de système autonome.

## Patentansprüche

1. Verfahren zur Konfiguration eines ersten Knotens eines Netzwerks, der eine erste autonome Systemnummer in mindestens einer mit einem anderen Knoten des Netzwerks aufgebauten und einem im Netzwerk angewendeten dynamischen Routing-Protokoll entsprechenden Sitzung verwendet, wobei das Verfahren die folgenden vom ersten Knoten durchgeführten Schritte enthält:
- einen Schritt des Empfangs (E10) einer Konfigurationsnachricht (CMD), die mindestens eine für mindestens eine zweite autonome Systemnummer, die dazu bestimmt ist, vom ersten Knoten als Ersatz für die erste autonome Systemnummer verwendet zu werden, repräsentative Information enthält;
- einen Schritt der Konfiguration (E40) des ersten Knotens mit der mindestens einen zweiten autonomen Systemnummer;
- einen Schritt der Identifizierung (E50) mindestens eines zweiten Knotens des Netzwerks, der mindestens eine dem dynamischen Routing-Protokoll entsprechende aktive Sitzung mit dem ersten Knoten hat, wobei der erste Knoten der ersten autonomen Systemnummer zugeordnet ist; und
- einen Schritt des Sendens (E60) an den mindestens einen zweiten Knoten einer Steuernachricht (ACTION), die den Ersatz durch den mindestens einen zweiten Knoten der dem ersten Knoten zugeordneten ersten autonomen Systemnummer durch die mindestens eine zweite autonome Systemnummer fordert, so dass nach dem Ersatz der erste Knoten einer zweiten autonomen Systemnummer in der mindestens einen aktiven Sitzung zugeordnet ist.

2. Konfigurationsverfahren nach Anspruch 1, wobei im Konfigurationsschritt der erste Knoten konfiguriert wird, um auf dem Netzwerk die mindestens eine zweite autonome Systemnummer sofort zu verwenden.

3. Konfigurationsverfahren nach Anspruch 1, wobei im Konfigurationsschritt der erste Knoten konfiguriert wird, um auf dem Netzwerk die mindestens eine zweite autonome Systemnummer bei Erfassung eines in der Konfigurationsnachricht angezeigten vorbestimmten Ereignisses verzögert zu verwenden.

4. Konfigurationsverfahren nach Anspruch 3, wobei die Steuernachricht eine Anzeige eines vom mindestens einen zweiten Knoten zu beachtenden Fälligkeitsdatums für den Ersatz der dem ersten Knoten zugeordneten ersten autonomen Systemnummer durch die mindestens eine zweite autonome Systemnummer enthält.

5. Konfigurationsverfahren nach einem der Ansprüche 1 bis 4, wobei die mindestens eine für die mindestens eine zweite autonome Systemnummer repräsentative Information enthält:
- die mindestens eine zweite autonome Systemnummer; oder
- mindestens eine Differenz zwischen der mindestens einen zweiten autonomen Systemnummer und der ersten autonomen Systemnummer.

6. Verfahren zur Verarbeitung einer Steuernachricht (ACTION), die einen Ersatz einer einem ersten Knoten eines ein dynamisches Routing-Protokoll anwendenden Netzwerks zugeordneten ersten autonomen Systemnummer durch mindestens eine zweite autonome Systemnummer fordert, wobei das Verarbeitungsverfahren von einem zweiten Knoten des Netzwerks durchgeführt wird und enthält:
- einen Schritt der Überprüfung (F40) ob es gibt:
- mindestens eine aktive Sitzung zwischen dem ersten Knoten und dem zweiten Knoten gemäß dem dynamischen Routing-Protokoll und in der der erste Knoten der ersten autonomen Systemnummer zugeordnet ist; und/oder
- mindestens eine der ersten autonomen Systemnummer zugeordnete Eingabe in mindestens eine vom zweiten Knoten gepflegte Routing-Tabelle für die Anwendung des dynamischen Routing-Protokolls im Netzwerk;
- wenn es mindestens eine aktive Sitzung gibt, einen Schritt des Ersatzes (F50) der dem ersten Knoten in der mindestens einen aktiven Sitzung zugeordneten ersten autonomen Systemnummer durch die mindestens eine zweite autonome Systemnummer; und
- wenn es mindestens eine Eingabe in mindestens eine vom zweiten Knoten gepflegten Routing-Tabelle gibt, einen Schritt des Ersatzes (F50) in der mindestens einen Routing-Tabelle der der mindestens einen Eingabe zugeordneten ersten autonomen Systemnummer durch die mindestens eine zweite autonome Systemnummer.

7. Verarbeitungsverfahren nach Anspruch 6, wobei die Steuernachricht eine Anzeige eines von dem mindestens einen zweiten Knoten zu beachtenden Fälligkeitsdatums für den Ersatz der ersten autonomen Systemnummer durch die mindestens eine zweite autonome Systemnummer enthält, wobei die Ersatzschritte programmiert sind, am Fälligkeitsdatum ausgeführt zu werden.

8. Verarbeitungsverfahren nach Anspruch 6 oder 7, das außerdem, wenn es mindestens eine der ersten autonomen Systemnummer in einer Routing-Tabelle zugeordnete Eingabe gibt, die mindestens eine vom zweiten Knoten mindestens einem dem zweiten Knoten benachbarten dritten Knoten des Netzwerks angekündigte Route enthält (F60), einen Schritt des Sendens (F70) der Steuernachricht an den mindestens einen dritten Knoten enthält.

9. Verarbeitungsverfahren nach Anspruch 8, das außerdem, wenn die vom zweiten Knoten empfangene Steuernachricht eine zu beachtende Verzögerungsdauer vor der Anwendung der mindestens einen zweiten autonome Systemnummer enthält, einen Schritt der Dekrementierung, ehe die Steuernachricht an den mindestens einen dritten Knoten geschickt wird, der Verzögerungsdauer um eine Verarbeitungsdauer der Steuernachricht durch den zweiten Knoten und um eine Weiterleitungsdauer der Steuernachricht zwischen dem zweiten Knoten und dem mindestens einen dritten Knoten enthält.

10. Computerprogramm (PROG4,PROG5), das Anweisungen zur Ausführung der Schritte des Konfigurationsverfahrens nach einem der Ansprüche 1 bis 5 oder zur Ausführung der Schritte des Verarbeitungsverfahrens nach einem der Ansprüche 6 bis 9 aufweist, wenn das Programm vom einem Computer ausgeführt wird.

11. Computerlesbarer Speicherträger, auf dem ein Computerprogramm nach Anspruch 10 gespeichert ist.

12. Vorrichtung (T21) eines Netzwerks, erster Knoten genannt, die konfiguriert ist, eine erste autonome Systemnummer in mindestens einer mit einem anderen Knoten des Netzwerks aufgebauten und einem im Netzwerk angewendeten dynamischen Routing-Protokoll entsprechenden Sitzung zu verwenden, wobei der erste Knoten enthält:
- ein Empfangsmodul (4A, 11), das fähig ist, eine Konfigurationsnachricht zu empfangen, die mindestens eine für mindestens eine zweite autonome Systemnummer, die dazu bestimmt ist, vom ersten Knoten als Ersatz für die erste autonome Systemnummer verwendet zu werden, repräsentative Information enthält;
- ein Konfigurationsmodul (4B), das parametriert ist, um den ersten Knoten mit der mindestens einen zweiten autonomen Systemnummer zu konfigurieren;
- ein Identifizierungsmodul (4C), das konfiguriert ist, mindestens einen zweiten Knoten des Netzwerks zu identifizieren, der mindestens eine aktive Sitzung gemäß dem dynamische Routing-Protokoll mit dem ersten Knoten hat, in der der erste Knoten der ersten autonomen Systemnummer zugeordnet ist; und
- ein Sendemodul (4D, 11), das konfiguriert ist, an den mindestens einen zweiten Knoten eine Steuernachricht zu senden, die den Ersatz durch den mindestens einen zweiten Knoten der dem ersten Knoten zugeordneten ersten autonomen Systemnummer durch die mindestens eine zweite autonome Systemnummer fordert, so dass nach dem Ersatz der erste Knoten einer zweiten autonomen Systemnummer in der mindestens einen aktiven Sitzung zugeordnet ist.

13. Vorrichtung eines Netzwerks (T31), zweiter Knoten genannt, die konfiguriert ist, eine Steuernachricht zu verarbeiten, die einen Ersatz einer einem ersten Knoten eines ein dynamisches Routing-Protokoll anwendenden Netzwerks zugeordneten ersten autonomen Systemnummer durch mindestens eine zweite autonome Systemnummer fordert, wobei der zweite Knoten enthält:
- ein Überprüfungsmodul (5B), das konfiguriert ist, zu überprüfen, ob es gibt:
- mindestens eine aktive Sitzung zwischen dem ersten Knoten und dem zweiten Knoten gemäß dem dynamischen Routing-Protokoll und in der der erste Knoten der ersten autonomen Systemnummer zugeordnet ist; und/oder
- mindestens eine der ersten autonomen Systemnummer zugeordnete Eingabe in mindestens eine vom zweiten Knoten gepflegte Routing-Tabelle für die Anwendung des dynamischen Routing-Protokolls im Netzwerk;
- ein erstes Ersatzmodul (5C), das aktiviert wird, wenn es mindestens eine aktive Sitzung gibt, und konfiguriert ist, die dem ersten Knoten in der mindestens einen aktiven Sitzung zugeordnete erste autonome Systemnummer durch die mindestens eine zweite autonome Systemnummer zu ersetzen; und
- ein zweites Ersatzmodul (5D), das aktiviert wird, wenn es mindestens eine Eingabe in mindestens eine vom zweiten Knoten gepflegte Routing-Tabelle gibt, und konfiguriert ist, in der mindestens einen Routing-Tabelle die der mindestens einen Eingabe zugeordnete erste autonome Systemnummer durch die mindestens eine zweite autonome Systemnummer zu ersetzen.

14. Kommunikationssystem (1) in einem Netzwerk, das ein dynamisches Routing-Protokoll anwendet und enthält:
- mindestens eine erster Knoten genannte Vorrichtung nach Anspruch 12, die mit einer ersten autonomen Systemnummer konfiguriert und fähig ist, eine Konfigurationsnachricht zu empfangen, die mindestens eine zweite autonome Systemnummer enthält, die dazu bestimmt ist, vom ersten Knoten im Netzwerk verwendet zu werden; und
- mindestens eine zweiter Knoten genannt Vorrichtung nach Anspruch 13.

15. Kommunikationssystem nach Anspruch 14, das einen Controller (2) und eine Vielzahl erster Knoten nach Anspruch 12 enthält, die mit ersten autonomen Systemnummern konfiguriert sind, wobei der Controller konfiguriert ist, wenn unterschiedliche erste autonome Systemnummern durch zweite autonome Systemnummern ersetzt werden sollen, nacheinander an die mit diesen unterschiedlichen ersten autonomen Systemnummern konfigurierten ersten Knoten die Konfigurationsnachrichten zu senden, die die zweiten autonomen Systemnummern enthalten, wobei der Controller konfiguriert ist, nachdem er eine Konfigurationsnachricht, die dazu bestimmt ist, eine erste autonome Systemnummer zu ersetzen, an mindestens einen mit dieser ersten autonomen Systemnummer konfigurierten ersten Knoten gesendet hat, den tatsächlichen Ersatz der ersten autonomen Systemnummer im Kommunikationssystem abzuwarten, ehe er eine Konfigurationsnachricht, die dazu bestimmt ist, eine andere erste autonome Systemnummer zu ersetzen, an mindestens einem anderen ersten Knoten sendet, der mit dieser anderen ersten autonomen Systemnummer konfiguriert ist.

16. Kommunikationssystem nach Anspruch 14, das einen Controller (2) und eine Vielzahl erster Knoten nach Anspruch 12 enthält, die mit ersten autonomen Systemnummern konfiguriert sind, wobei der Controller konfiguriert ist, wenn den ersten Knoten zugeordnete unterschiedliche erste autonome Systemnummern durch zweite autonome Systemnummern ersetzt werden sollen, in die an die ersten Knoten gesendeten Konfigurationsnachrichten eine Angabe eines gleichen Fälligkeitsdatums einzufügen, das für jeden der ersten Knoten zu beachten ist, um innerhalb des Netzwerks die zweiten autonomen Systemnummern als Ersatz der ersten autonomen Systemnummern zu verwenden.

## Claims

1. Method for configuring a first node of a network using a first autonomous system number in at least one session established with another node of the network and in accordance with a dynamic routing protocol implemented in the network, said method comprising the following steps implemented by the first node:
- a step (E10) of receiving a configuration message (CMD) comprising at least one item of information representative of at least one second autonomous system number intended to be used by the first node as a replacement for the first autonomous system number;
- a step (E40) of configuring said first node with said at least one second autonomous system number;
- a step (E50) of identifying at least one second node of the network having at least one session, in accordance with said dynamic routing protocol, active with the first node, in which the first node is associated with the first autonomous system number; and a step (E60) of sending, to said at least one second node, a control message (ACTION) requesting that said at least one second node replace said first autonomous system number associated with said first node with said at least one second autonomous system number such that, after said replacement, the first node is associated with a said second autonomous system number in said at least one active session.

2. Configuration method according to Claim 1, wherein, in the configuration step, the first node is configured to immediately use said at least one second autonomous system number on said network.

3. Configuration method according to Claim 1, wherein, in the configuration step, the first node is configured to use said at least one second autonomous system number on said network in a delayed manner upon detection of a predetermined event indicated in the configuration message.

4. Configuration method according to Claim 3, wherein the control message comprises an indication of a deadline to be complied with by said at least one second node to replace said first autonomous system number associated with said first node with said at least one second autonomous system number.

5. Configuration method according to any one of Claims 1 to 4, wherein said at least one item of information representative of said at least one second autonomous system number comprises:
- said at least one second autonomous system number; or
- at least one difference between said at least one second autonomous system number and said first autonomous system number.

6. Method for processing a control message (ACTION) requesting replacement of a first autonomous system number associated with a first node of a network implementing a dynamic routing protocol with at least one second autonomous system number, said processing method being implemented by a second node of the network and comprising:
- a step (F40) of checking whether there is:
- at least one active session between the first node and the second node in accordance with the dynamic routing protocol and in which the first node is associated with the first autonomous system number; and/or
- at least one entry associated with the first autonomous system number in at least one routing table maintained by the second node in order to implement the dynamic routing protocol in the network;
- if there is at least one active session, a step (F50) of replacing the first autonomous system number associated with the first node in said at least one active session with said at least one second autonomous system number; and
- if there is at least one entry in at least one routing table maintained by the second node, a step (F50) of replacing the first autonomous system number associated with said at least one entry with said at least one second autonomous system number in said at least one routing table.

7. Processing method according to Claim 6, wherein the control message comprises an indication of a deadline to be complied with by said at least one second node to replace the first autonomous system number with said at least one second autonomous system number, said replacement steps being programmed to be executed at said deadline.

8. Processing method according to Claim 6 or 7, furthermore comprising, if there is at least one entry associated with the first autonomous system number in a routing table containing at least one route advertised by the second node to at least one third node of the network adjacent to the second node (F60), a step (F70) of sending the control message to said at least one third node.

9. Processing method according to Claim 8, furthermore comprising, when the control message received by the second node comprises a delay duration to be complied with before applying said at least one second autonomous system number, a step of decrementing, before sending the control message to said at least one third node, the delay duration by a duration for the processing of the control message by the second node and by a duration for the routing of the control message between the second node and said at least one third node.

10. Computer program (PROG4, PROG5) comprising instructions for executing the steps of the configuration method according to any one of Claims 1 to 5 or for executing the steps of the processing method according to any one of Claims 6 to 9 when said program is executed by a computer.

11. Computer-readable recording medium on which a computer program according to Claim 10 is recorded.

12. Network device (T21), called first node, configured to use a first autonomous system number in at least one session established with another node of the network and in accordance with a dynamic routing protocol implemented in the network, said first node comprising:
- a reception module (4A, 11), able to receive a configuration message comprising at least one item of information representative of at least one second autonomous system number intended to be used by the first node as a replacement for the first autonomous system number;
- a configuration module (4B) parameterized to configure the first node with said at least one second autonomous system number;
- an identification module (4C) configured to identify at least one second node of the network having at least one session in accordance with the dynamic routing protocol active with the first node, in which the first node is associated with the first autonomous system number; and
- a sending module (4D, 11) configured to send, to said at least one second node, a control message requesting that said at least one second node replace the first autonomous system number associated with said first node with said at least one second autonomous system number such that, after said replacement, the first node is associated with a said second autonomous system number in said at least one active session.

13. Network device (T31), called second node, configured to process a control message requesting replacement of a first autonomous system number associated with a first node of a network implementing a dynamic routing protocol with at least one second autonomous system number, said second node comprising:
- a checking module (5B), configured to check whether there is:
- at least one active session between the first node and the second node in accordance with the dynamic routing protocol and in which the first node is associated with the first autonomous system number; and/or
- at least one entry associated with the first autonomous system number in at least one routing table maintained by the second node in order to implement the dynamic routing protocol in the network;
- a first replacement module (5C), activated if there is at least one active session, and configured to replace the first autonomous system number associated with the first node in said at least one active session with said at least one second autonomous system number; and
- a second replacement module (5D), activated if there is at least one entry in at least one routing table maintained by the second node, and configured to replace the first autonomous system number associated with said at least one entry with said at least one second autonomous system number in said at least one routing table.

14. Communication system (1) for communication in a network implementing a dynamic routing protocol and comprising:
- at least one device, called first node, according to Claim 12, configured with a first autonomous system number and able to receive a configuration message comprising at least one second autonomous system number intended to be used by the first node on the network; and
- at least one device, called second node, according to Claim 13.

15. Communication system according to Claim 14, comprising a controller (2) and a plurality of first nodes according to Claim 12 configured with said first autonomous system numbers, said controller being configured, when said distinct first autonomous system numbers have to be replaced with second autonomous system numbers, to successively send, to said first nodes configured with these distinct first autonomous system numbers, the configuration messages comprising said second autonomous system numbers, said controller being configured to wait, after having sent a said configuration message intended to replace a said first autonomous system number to at least one said first node configured with this first autonomous system number, for the effective replacement of said first autonomous system number in the communication system before sending a configuration message intended to replace another said first autonomous system number to at least one other said first node configured with this other first autonomous system number.

16. Communication system according to Claim 14, comprising a controller (2) and a plurality of first nodes according to Claim 12 configured with said first autonomous system numbers, said controller being configured, when said distinct first autonomous system numbers associated with said first nodes have to be replaced with second autonomous system numbers, to include, in said configuration messages sent to said first nodes, an indication of one and the same deadline to be complied with for each of said first nodes to use said second autonomous system numbers as a replacement for said first autonomous system numbers within the network.
